(19) Europäisches Patentamt
European Patent Office
Office européen des brevets

(11) **EP 4 716 316 A1**

(12) **EUROPEAN PATENT APPLICATION**
published in accordance with Art. 153(4) EPC

(43) Date of publication:
**25.03.2026 Bulletin 2026/13**

(21) Application number: **24806647.4**

(22) Date of filing: **16.05.2024**

(51) International Patent Classification (IPC):
***H04W 52/14*** (2009.01)

(52) Cooperative Patent Classification (CPC):
**H04L 5/00; H04W 52/14**

(86) International application number:
**PCT/CN2024/093780**

(87) International publication number:
**WO 2024/235297 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 CN 202310544333**

(71) Applicant: **Datang Mobile Communications Equipment Co., Ltd.**
**Beijing 100085 (CN)**

(72) Inventor: **HUANG, Qiuping**
**Beijing 100085 (CN)**

(74) Representative: **Studio Torta S.p.A.**
**Via Viotti, 9**
**10121 Torino (IT)**

(54) **SRS TRANSMISSION METHOD, INDICATION METHOD, APPARATUS, TERMINAL AND NETWORK DEVICE**

(57) The present disclosure provides an SRS transmission method, an indication method, an apparatus, a terminal, and a network device. The method comprises: determining a transmission power of an SRS antenna port of a first SRS resource on the basis of a first factor and a first power; transmitting an SRS on the basis of the transmission power of the SRS antenna port of the first SRS resource, the first power being a power determined on the basis of one or more of the following parameters: a maximum output power corresponding to SRS transmission, a maximum output power corresponding to uplink transmission, path-loss information, resource allocation information, or a target power.

determining a transmission power of an SRS antenna port in a first SRS resource based on a first factor and a first power —— S210

transmitting the SRS based on the transmission power of the SRS antenna port in the first SRS resource;
wherein the first power is a power determined based on one or more of the following parameters:
a maximum output power corresponding to SRS transmission;
a maximum output power corresponding to uplink transmission;
path-loss information;
resource allocation information; or
a target power —— S220

**FIG. 2**

**Description**

The present disclosure claims priority to the Chinese Patent Application No. 202310544333.X filed before the Chinese Patent Office on May 16, 2023, and titled SRS Transmission Method, Indication Method, Apparatus, Terminal, and Network Device, the entire contents of which are incorporated herein by reference.

**TECHNICAL FIELD**

The present disclosure relates to the field of radio techniques, and in particular, to an SRS transmission method, an SRS indication method, an apparatus, a terminal, and a network device.

**BACKGROUND**

In the related art, after determining the transmission power corresponding to a Sounding Reference Signal (SRS), the transmission power is usually equally split across all SRS antenna ports of the SRS resource to determine the transmit power of the SRS resource at each SRS antenna port.

For an SRS resource mapped to a plurality of Orthogonal Frequency Division Multiplexing (OFDM) symbols in a Time Division Multiplexing (TDM) manner, according to the SRS power control method in the related art, the transmission power of the SRS resource is equally split across the OFDM symbols. For the terminal, if the maximum transmission power of the terminal's Power Amplifier (PA) is not reached, the terminal's PA capability cannot be fully utilized, and thus the SRS transmission cannot achieve optimal performance.

**SUMMARY**

An objective of the present disclosure is to provide an SRS transmission method, an SRS indication method, an apparatus, a terminal, and a network device, so as to solve the problem that when the SRS transmission method in the related art is used, the transmission power of the SRS resource is equally split across each OFDM symbol, leading to the terminal's PA capability not being fully utilized and the SRS transmission failing to achieve optimal performance.

An embodiment of the present disclosure provides a method for transmitting a Sounding Reference Signal (SRS), including: determining the transmission power of an SRS antenna port of a first SRS resource based on a first coefficient and a first power; transmitting the SRS based on the transmission power of the SRS antenna port of the first SRS resource; wherein the first power is a power determined based on one or more of the following parameters: a maximum output power corresponding to SRS transmission; a maximum output power corresponding to uplink transmission; path-loss information; resource allocation information; or a target power.

Optionally, in the SRS transmission method, the first power includes one or more of the following: a maximum output power corresponding to SRS transmission; a maximum output power corresponding to uplink transmission; a third power; a power determined based on the minimum value between the third power and the maximum output power corresponding to SRS transmission; or a power determined based on the minimum value between the third power and the maximum output power corresponding to uplink transmission; wherein the third power is a power determined based on at least one of the path-loss information, the resource allocation information, and the target power.

Optionally, in the SRS transmission method, determining the transmission power of an SRS antenna port of a first SRS resource based on a first factor and a first power includes: determining the total transmission power corresponding to the first SRS resource based on the first factor and the first power; determining the transmission power of the SRS antenna port of the first SRS resource based on the total transmission power corresponding to the first SRS resource; or,

determining the transmission power of the SRS antenna port of the first SRS resource by performing an operation on the first factor and the first power; or,

determining the transmission power corresponding to the first SRS resource on a first time-domain resource based on the first factor and the first power; determining the transmission power of the SRS antenna port of the first SRS resource on the first time-domain resource based on the transmission power corresponding to the first SRS resource on the first time-domain resource; or,

determining the transmission power of the SRS antenna port of the first SRS resource on the first time-domain resource based on the first factor and the first power.

Optionally, determining the total transmission power corresponding to the first SRS resource based on the first factor and the first power includes: determining the total transmission power corresponding to the first SRS resource by performing an operation on the first factor and the first power; and/or,

determining the transmission power corresponding to the first SRS resource on a first time-domain resource based on the first factor and the first power includes: determining the transmission power corresponding to the first SRS resource on the first time-domain resource by performing an operation on the first factor and the first power; and/or, determining the transmission power of the SRS antenna port of the first SRS resource on the first time-domain resource based on the first factor and the first power includes: determining the transmission power of the SRS antenna port of the first SRS resource on the first time-domain resource by performing an operation on the first factor and the first power.

Optionally, the first SRS resource is transmitted on multiple first time-domain resources, and determining the transmission power of the SRS antenna port of the first SRS resource on the first time-domain resource based on the first factor and the first power includes: for a given time-domain resource among the multiple first time-domain resources, equally splitting the first power across the SRS antenna ports on the given first time-domain resource, where the first factor is determined based on first information, and the first information is the number of SRS antenna ports in the first SRS resource included in the given first time-domain resource. Optionally, the given first time-domain resource is a given OFDM symbol, and the first information is the number of SRS antenna ports in the first SRS resource included in the OFDM symbol.

Optionally, the first SRS resource is transmitted on multiple OFDM symbols, and the first time-domain resource is an OFDM symbol; or the first SRS resource is transmitted on multiple OFDM symbol groups, and the first time-domain resource is an OFDM symbol group.

Optionally, in the SRS transmission method, performing an operation on the first factor and the first power includes performing an operation on the first factor and the first power in one of the following manners: scaling the linear value of the first power using the first factor; scaling the linear value of the first power using the inverse of the first factor; summing the power value corresponding to the first factor and the power value of the first power; subtracting the power value corresponding to the first factor from the power value of the first power; multiplying the first factor by the linear value of the first power; or dividing the linear value of the first power by the first factor.

Optionally, in the SRS transmission method, there is at least one first factor; there is at least one first power, and when there are at least two first powers, the at least two first powers are determined in different manners; determining the transmission power of an SRS antenna port of a first SRS resource based on a first factor and a first power includes: obtaining a fourth power based on an operation of one first factor and one first power; obtaining a fifth power based on an operation of one first factor and another first power; determining the transmission power of the SRS antenna port of the first SRS resource based on the minimum value between the fourth power and the fifth power.

Optionally, in the SRS transmission method, determining the transmission power of an SRS antenna port of a first SRS resource based on a first factor and a first power includes: determining a sixth power based on the first factor and the first power; determining the total transmission power of the SRS antenna port of the first SRS resource based on the sixth power and a seventh power; wherein the first power includes one of a maximum output power corresponding to SRS transmission, a maximum output power corresponding to uplink transmission, and a third power; the seventh power is a power determined based on one or more of the following items that are not used to determine the first power: a maximum output power corresponding to SRS transmission; a maximum output power corresponding to uplink transmission; path-loss information; resource allocation information; a target power.

Optionally, determining a sixth power based on the first factor and the first power includes: determining the sixth power by performing an operation on the first factor and the first power.

Optionally, determining a sixth power based on the first factor and the first power includes: determining the sixth power by performing an operation on the first factor and the first power.

Optionally, determining the total transmission power corresponding to the first SRS resource based on the first factor and the first power includes: determining the total transmission power corresponding to the first SRS resource by performing an operation on the first factor and the first power; and/or,

determining the transmission power corresponding to the first SRS resource on a first time-domain resource based on the first factor and the first power includes: determining the transmission power corresponding to the first SRS resource on the first time-domain resource by performing an operation on the first factor and the first power.

Optionally, in the SRS transmission method, the first SRS resource includes multiple SRS antenna port groups, and the method further includes: determining the first factor for each SRS antenna port group respectively; determining the transmission power of an SRS antenna port of a first SRS resource based on a first factor and a first power includes: for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group.

Optionally, in the SRS transmission method, the first SRS resource is mapped to multiple groups of first time-domain resources within one slot, and the method includes: determining the first factor for each group of first time-domain resources respectively; determining the transmission power of an SRS antenna port of a first SRS resource based on a first factor and a first power includes: for any group of first time-domain resources among the multiple groups of first time-domain resources, determining the transmission power corresponding to the SRS antenna port of the corresponding group of first time-domain resources based on the first factor and the first power corresponding to the corresponding group of first time-domain resources.

Optionally, for one group of first time-domain resources among the multiple groups of first time-domain resources, the transmission power corresponding to the SRS antenna port of the group of first time-domain resources is determined based on the first factor and the first power corresponding to the group of first time-domain resources.

Optionally, in the SRS transmission method, determining the transmission power of the SRS antenna port of the first SRS resource based on the total transmission power corresponding to the first SRS resource includes: equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the SRS transmission method, determining the transmission power of the SRS antenna port of the first SRS resource on the first time-domain resource based on the transmission power corresponding to the first SRS resource on the first time-domain resource includes: equally allocating the transmission power corresponding to the first SRS resource on the first time-domain resource to the SRS antenna ports of the first SRS resource on the first time-domain resource, and using the power allocated to each SRS antenna port as the transmission power of each SRS antenna port of the first SRS resource on the first time-domain resource.

Optionally, the SRS transmission method further includes: determining the first factor according to one or more of the following information: terminal capability; indication information sent by a base station; or first information, where the first information is related to the first SRS resource.

Optionally, in the SRS transmission method, the first information includes one or more of the following parameters: the number of SRS antenna ports included in the first SRS resource; a time-division multiplexing factor of the first SRS resource; the number of first time-domain resources occupied by the first SRS resource within one second time-domain resource; the number of first time-domain resources occupied by one SRS port of the first SRS resource within one second time-domain resource; a repetition factor of the first SRS resource; a frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

An embodiment of the present disclosure further provides a method for transmitting a Sounding Reference Signal (SRS), including: determining the transmission power of an SRS antenna port of a first SRS resource based on a second power; transmitting the SRS based on the transmission power of the SRS antenna port of the first SRS resource; wherein the second power is a power determined based on a second parameter and one or more of the following parameters: a maximum output power corresponding to SRS transmission; a maximum output power corresponding to uplink transmission; path-loss information; resource allocation information; or a target power.

Optionally, in the SRS transmission method, the second power includes one or more of the following: a power determined based on the second parameter and a maximum output power corresponding to SRS transmission; a power determined based on the second parameter and a maximum output power corresponding to uplink transmission; a power determined based on the second parameter and a third power; a power determined based on the second parameter and an eighth power, where the eighth power is the minimum value between the third power and the maximum output power corresponding to SRS transmission; a power determined based on the second parameter and a ninth power, where the ninth power is the minimum value between the third power and the maximum output power corresponding to uplink transmission; wherein the third power is a power determined based on at least one of the path-loss information, the resource allocation information, and the target power.

Optionally, in the SRS transmission method, determining the transmission power of an SRS antenna port of a first SRS resource based on a second power includes:

determining the transmission power of the SRS antenna port of the first SRS resource based on the second power; or,
determining the transmission power of the SRS antenna port of the first SRS resource on a first time-domain resource based on the second power; or,
determining the total transmission power corresponding to the first SRS resource based on the second power; determining the transmission power of the SRS antenna port of the first SRS resource based on the total transmission power corresponding to the first SRS resource; or,
determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Optionally, in the SRS transmission method, determining the transmission power of an SRS antenna port of a first SRS resource based on a second power includes:

determining the transmission power of the SRS antenna port of the first SRS resource based on the second power and a tenth power; the tenth power is a power determined based on one or more of the following:
a maximum output power corresponding to SRS transmission; a maximum output power corresponding to uplink transmission; path-loss information; resource allocation information; or a target power.

Optionally, in the SRS transmission method, the first SRS resource includes multiple SRS antenna port groups, and the method further includes: determining the second parameter for each SRS antenna port group respectively; determining the second power for each SRS antenna port group respectively; determining the transmission power of an SRS antenna port of a first SRS resource based on a second power includes: for one SRS antenna port group among the multiple SRS antenna port groups included in the first SRS resource, determining the transmission power corresponding to the SRS antenna port of the one SRS antenna port group based on the second power corresponding to the one SRS antenna port group.

Optionally, in the SRS transmission method, the first SRS resource is mapped to multiple groups of first time-domain resources within one slot, and the method includes: determining the second parameter for each group of first time-domain resources respectively; determining the second power for each group of first time-domain resources respectively; determining the transmission power of an SRS antenna port of a first SRS resource based on a second power includes: for any group of first time-domain resources among the multiple groups of first time-domain resources, determining the transmission power corresponding to the SRS antenna port of the first time-domain resource of the corresponding group based on the second power corresponding to the first time-domain resource of the corresponding group.

Optionally, for one group of first time-domain resources among the multiple groups of first time-domain resources, the transmission power corresponding to the SRS antenna port of the group of first time-domain resources is determined based on the second power corresponding to the group of first time-domain resources.

Optionally, in the SRS transmission method, determining the transmission power of the SRS antenna port of the first SRS resource based on the total transmission power corresponding to the first SRS resource includes: equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the SRS transmission method, determining the transmission power of the SRS antenna port of the first SRS resource on the first time-domain resource based on the transmission power corresponding to the first SRS resource on the first time-domain resource includes: equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Optionally, the SRS transmission method further includes: determining the second parameter according to one or more of the following information: terminal capability; indication information sent by a base station; first information, where the first information is related to the first SRS resource.

Optionally, in the SRS transmission method, the first information includes one or more of the following parameters: the number of SRS antenna ports included in the first SRS resource; a time-division multiplexing factor of the first SRS resource; the number of first time-domain resources occupied by the first SRS resource within one second time-domain resource; the number of first time-domain resources occupied by one SRS port of the first SRS resource within one second time-domain resource; a repetition factor of the first SRS resource; a frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

An embodiment of the present disclosure further provides a method for transmitting a Sounding Reference Signal (SRS), including: determining the transmission power of an SRS antenna port of a first SRS resource based on a maximum output power corresponding to SRS transmission; transmitting the SRS based on the transmission power of the SRS antenna port of the first SRS resource.

Optionally, in the transmission method, determining the transmission power of an SRS antenna port of a first SRS resource based on a maximum output power corresponding to SRS transmission includes:

determining the total transmission power corresponding to the first SRS resource based on the maximum output power corresponding to SRS transmission; determining the transmission power of the SRS antenna port of the first SRS resource based on the total transmission power corresponding to the first SRS resource.

Optionally, in the transmission method, determining the total transmission power corresponding to the first SRS resource based on a maximum output power corresponding to SRS transmission includes: determining that the total transmission power corresponding to the first SRS resource is equal to the minimum power of the maximum output power corresponding to SRS transmission and a third power; wherein the third power is a power determined based on at least one of the path-loss information, the resource allocation information, and the target power.

An embodiment of the present disclosure further provides an information indication method for a Sounding Reference Signal (SRS), including: sending indication information to a terminal, where the indication information is used to indicate a first factor; wherein the first factor is used to perform an operation with a first power to determine the transmission power of an SRS antenna port of a first SRS resource; the first power is a power determined based on one or more of the following parameters: a maximum output power corresponding to SRS transmission; a maximum output power corresponding to uplink transmission; path-loss information; resource allocation information; or a target power.

An embodiment of the present disclosure further provides an information indication method for a Sounding Reference Signal (SRS), including: sending indication information to a terminal, where the indication information indicates a second parameter used to determine a second power; wherein the second power is a power determined based on the second parameter and one or more of the following parameters: a maximum output power corresponding to SRS transmission; a maximum output power corresponding to uplink transmission; path-loss information; resource allocation information; a target power.

An embodiment of the present disclosure further provides a terminal, including a memory, a transceiver, and a processor: the memory is configured to store a computer program; the transceiver is configured to send and receive data under the control of the processor; the processor is configured to read the computer program in the memory and perform the following operations: determining the transmission power of an SRS antenna port of a first SRS resource based on a first factor and a first power; transmitting the SRS based on the transmission power of the SRS antenna port of the first SRS resource; wherein the first power is a power determined based on one or more of the following parameters: a maximum output power corresponding to SRS transmission; a maximum output power corresponding to uplink transmission; path-loss information; resource allocation information; or a target power.

Optionally, in the terminal, the first power includes one or more of the following: a maximum output power corresponding to SRS transmission; a maximum output power corresponding to uplink transmission; a third power; a power determined based on the minimum value between the third power and the maximum output power corresponding to SRS transmission; or a power determined based on the minimum value between the third power and the maximum output power corresponding to uplink transmission; wherein the third power is a power determined based on at least one of the path-loss information, the resource allocation information, and the target power.

Optionally, in the terminal, the operation of the processor determining the transmission power of an SRS antenna port of a first SRS resource based on a first factor and a first power includes: determining the total transmission power corresponding to the first SRS resource by performing an operation on the first factor and the first power; determining the transmission power of the SRS antenna port of the first SRS resource based on the total transmission power corresponding to the first SRS resource; or,

determining the transmission power of the SRS antenna port of the first SRS resource by performing an operation on the first factor and the first power; or,

determining the transmission power corresponding to the first SRS resource on a first time-domain resource by performing an operation on the first factor and the first power; determining the transmission power of the SRS antenna port of the first SRS resource on the first time-domain resource based on the transmission power corresponding to the first SRS resource on the first time-domain resource; or,

determining the transmission power of the SRS antenna port of the first SRS resource on the first time-domain resource by performing an operation on the first factor and the first power.

An embodiment of the present disclosure further provides a terminal, including a memory, a transceiver, and a processor: the memory is configured to store a computer program; the transceiver is configured to send and receive data under the control of the processor; the processor is configured to read the computer program in the memory and perform the following operations: determining the transmission power of an SRS antenna port of a first SRS resource based on a second power; transmitting the SRS based on the transmission power of the SRS antenna port of the first SRS resource; wherein the second power is a power determined based on a second parameter and one or more of the following parameters: a maximum output power corresponding to SRS transmission; a maximum output power corresponding to uplink transmission; path-loss information; resource allocation information; or a target power.

Optionally, in the terminal, the second power includes one or more of the following: a power determined based on the second parameter and a maximum output power corresponding to SRS transmission; a power determined based on the second parameter and a maximum output power corresponding to uplink transmission; a power determined based on the second parameter and a third power; a power determined based on the second parameter and an eighth power, where the eighth power is the minimum value between the third power and the maximum output power corresponding to SRS transmission; a power determined based on the second parameter and a ninth power, where the ninth power is the minimum value between the third power and the maximum output power corresponding to uplink transmission; wherein the third power is a power determined based on at least one of the path-loss information, the resource allocation information, and the target power.

An embodiment of the present disclosure further provides a terminal, including a memory, a transceiver, and a processor: the memory is configured to store a computer program; the transceiver is configured to send and receive data under the control of the processor; the processor is configured to read the computer program in the memory and perform the following operations: determining the transmission power of an SRS antenna port of a first SRS resource based on a maximum output power corresponding to SRS transmission; transmitting the SRS based on the transmission power of the SRS antenna port of the first SRS resource.

An embodiment of the present disclosure further provides a network device, including a memory, a transceiver, and a processor: the memory is configured to store a computer program; the transceiver is configured to send and receive data under the control of the processor; the processor is configured to read the computer program in the memory and perform the following operations: sending indication information to a terminal, where the indication information is used to indicate a first factor; wherein the first factor is used to perform an operation with a first power to determine the transmission power of an SRS antenna port of a first SRS resource; the first power is a power determined based on one or more of the following parameters: a maximum output power corresponding to SRS transmission; a maximum output power corresponding to uplink transmission; path-loss information; resource allocation information; or a target power.

An embodiment of the present disclosure further provides a network device, including a memory, a transceiver, and a processor: the memory is configured to store a computer program; the transceiver is configured to send and receive data under the control of the processor; the processor is configured to read the computer program in the memory and perform the following operations: sending indication information to a terminal, where the indication information indicates a second parameter used to determine a second power; wherein the second power is a power determined based on the second parameter and one or more of the following parameters: a maximum output power corresponding to SRS transmission; a maximum output power corresponding to uplink transmission; path-loss information; resource allocation information; a target power.

An embodiment of the present disclosure further provides an apparatus for transmitting a Sounding Reference Signal (SRS), including: a first power determination unit, configured to determine the transmission power of an SRS antenna port of a first SRS resource based on a first factor and a first power; a first transmission unit, configured to transmit the SRS based on the transmission power of the SRS antenna port of the first SRS resource; wherein the first power is a power determined based on one or more of the following parameters: a maximum output power corresponding to SRS transmission; a maximum output power corresponding to uplink transmission; path-loss information; resource allocation information; or a target power.

An embodiment of the present disclosure further provides an apparatus for transmitting a Sounding Reference Signal (SRS), including: a second power determination unit, configured to determine the transmission power of an SRS antenna port of a first SRS resource based on a second power; a second transmission unit, configured to transmit the SRS based on the transmission power of the SRS antenna port of the first SRS resource; wherein the second power is a power determined based on a second parameter and one or more of the following parameters: a maximum output power corresponding to SRS transmission; a maximum output power corresponding to uplink transmission; path-loss information; resource allocation information; or a target power.

An embodiment of the present disclosure further provides an apparatus for transmitting a Sounding Reference Signal (SRS), including: a third power determination unit, configured to determine the transmission power of an SRS antenna port of a first SRS resource based on a maximum output power corresponding to SRS transmission; a third transmission unit, configured to transmit the SRS based on the transmission power of the SRS antenna port of the first SRS resource.

An embodiment of the present disclosure further provides an information indication apparatus for a Sounding Reference Signal (SRS), including: a first indication sending unit, configured to send indication information to a terminal, where the indication information is used to indicate a first factor; wherein the first factor is used to perform an operation with a first power to determine the transmission power of an SRS antenna port of a first SRS resource; the first power is a power determined based on one or more of the following parameters: a maximum output power corresponding to SRS transmission; a maximum output power corresponding to uplink transmission; path-loss information; resource allocation information; or a target power.

An embodiment of the present disclosure further provides an information indication apparatus for a Sounding Reference Signal (SRS), including: a second indication sending unit, configured to send indication information to a terminal, where the indication information indicates a second parameter used to determine a second power; wherein the second power is a power determined based on the second parameter and one or more of the following parameters: a maximum output power corresponding to SRS transmission; a maximum output power corresponding to uplink transmission; path-loss information; resource allocation information; a target power.

An embodiment of the present disclosure further provides a processor-readable storage medium, where the processor-readable storage medium stores a computer program, and the computer program is configured to cause the processor to execute the transmission method according to any one of the above, or to cause the processor to execute the information indication method according to any one of the above.

Beneficial effects of the technical solutions of the present disclosure

By using the SRS transmission method according to the embodiment of the present disclosure, the transmission power of the SRS antenna port of the first SRS resource is determined based on the first factor and the first power, so that the transmission power of the SRS antenna port of the first SRS resource is adjusted and scaled by the first factor, thereby improving the transmission performance of the SRS resource.

**BRIEF DESCRIPTION OF THE DRAWINGS**

FIG. 1 is a schematic diagram of a wireless communication system architecture according to an embodiment of the present disclosure;
FIG. 2 is a first schematic flowchart of a transmission method according to an embodiment of the present disclosure;
FIG. 3 is a second schematic flowchart of a transmission method according to an embodiment of the present disclosure;
FIG. 4 is a third schematic flowchart of a transmission method according to an embodiment of the present disclosure;
FIG. 5 is a first schematic flowchart of an information indication method according to an embodiment of the present disclosure;
FIG. 6 is a second schematic flowchart of an information indication method according to an embodiment of the present disclosure;
FIG. 7 is a first schematic structural diagram of a terminal according to an embodiment of the present disclosure;
FIG. 8 is a second schematic structural diagram of a terminal according to an embodiment of the present disclosure;
FIG. 9 is a third schematic structural diagram of a terminal according to an embodiment of the present disclosure;
FIG. 10 is a first schematic structural diagram of a network device according to an embodiment of the present disclosure;
FIG. 11 is a second schematic structural diagram of a network device according to an embodiment of the present disclosure;
FIG. 12 is a first schematic structural diagram of a transmission apparatus according to an embodiment of the present disclosure;
FIG. 13 is a second schematic structural diagram of a transmission apparatus according to an embodiment of the present disclosure;
FIG. 14 is a third schematic structural diagram of a transmission apparatus according to an embodiment of the present disclosure;
FIG. 15 is a first schematic structural diagram of an information indication apparatus according to an embodiment of the present disclosure;
FIG. 16 is a second schematic structural diagram of an information indication apparatus according to an embodiment of the present disclosure.

**DETAILED DESCRIPTION**

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. All other embodiments obtained by those of ordinary skill in the art based on the embodiments of the present disclosure without creative work shall fall within the protection scope of the present disclosure.
The term "and/or" in the embodiments of the present disclosure describes an association relationship between associated objects, indicating that there may be three relationships. For example, A and/or B may mean that A exists alone, A and B exist together, or B exists alone. The character / generally indicates that the associated objects are in an or relationship.
The term "a plurality of" in the embodiments of the present disclosure means two or more, and other quantifiers are similar thereto.
The technical solutions provided in the embodiments of the present disclosure can be applied to various systems, especially 5G systems. For example, the applicable systems may be a Global System for Mobile Communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunications System (UMTS), a Worldwide Interoperability for Microwave Access (WiMAX) system, a 5G New Radio (NR) system, etc. Each of the multiple systems includes a terminal device and a network device. The system may further include a core network part, such as an Evolved Packet System (EPS), a 5G System (5GS), and the like.

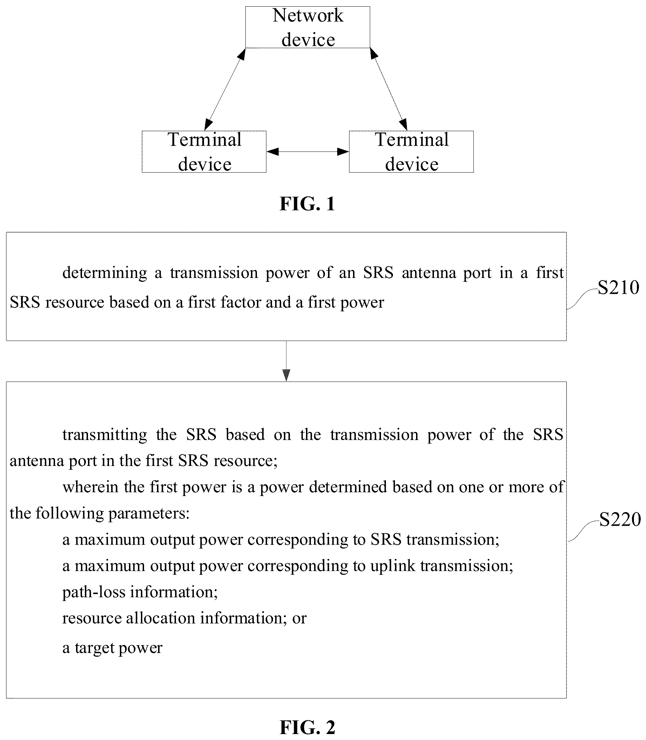

FIG. 1 is a block diagram of a wireless communication system to which the embodiments of the present disclosure can be applied. The wireless communication system includes a terminal device and a network device.

The terminal device involved in the embodiments of the present disclosure may be a device that provides voice and/or data connectivity to a user, a handheld device with a wireless connection function, or another processing device connected to a wireless modem. In different systems, the name of the terminal device may also be different. For example, in a 5G system, the terminal device may be called User Equipment (UE). The wireless terminal device can communicate with one or more Core Networks (CN) through a Radio Access Network (RAN). The wireless terminal device can be a mobile terminal device, such as a mobile phone (also called a cellular phone) and a computer with a mobile terminal device. For example, it can be a portable, pocket-sized, handheld, computer-built-in or vehicle-mounted mobile device that exchanges voice and/or data with a radio access network. For example, devices such as a Personal Communication Service (PCS) phone, a cordless phone, a Session Initiated Protocol (SIP) phone, a Wireless Local Loop (WLL) station, or a Personal Digital Assistant (PDA). The wireless terminal device can also be called a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells serving the terminal. According to different specific application scenarios, the base station may also be called an access point, or a device in an access network that communicates with a wireless terminal device through one or more sectors on an air interface, or another name. The network device can be configured to exchange the received over-the-air frames with Internet Protocol (IP) packets as a router between the wireless terminal device and the rest of the access network, where the rest of the access network may include an Internet Protocol (IP) communication network. The network device can also coordinate the attribute management of the air interface. For example, the network device in the embodiments of the present disclosure may be a Base Transceiver Station (BTS) in a Global System for Mobile Communications (GSM) or a Code Division Multiple Access (CDMA), a network device (NodeB) in a Wideband Code Division Multiple Access (WCDMA), an evolved network device (Evolutional Node B, eNB or e-NodeB) in a Long Term Evolution (LTE) system, a 5G base station (gNB) in a next-generation system, a Home Evolved NodeB (HeNB), a relay node, a home base station (femto), a pico base station (pico), etc., which is not limited in the embodiments of the present disclosure. In some network structures, the network device may include a Centralized Unit (CU) node and a Distributed Unit (DU) node, and the centralized unit and the distributed unit may also be arranged geographically separately.

Both the network device and the terminal device can use one or more antennas to perform Multi-Input Multi-Output (MIMO) transmission, and the MIMO transmission can be Single-User MIMO (SU-MIMO) or Multi-User MIMO (MU-MIMO). According to the form and quantity of antenna combinations, the MIMO transmission can be Two-Dimensional MIMO (2D-MIMO), Three-Dimensional MIMO (3D-MIMO), Full-Dimension MIMO (FD-MIMO), or Massive MIMO (massive-MIMO), and can also be diversity transmission, precoding transmission, or beamforming transmission.

In the related art, for an SRS resource mapped to multiple Orthogonal Frequency Division Multiplexing (OFDM) symbols in a TDM manner, it is assumed that there are N SRS antenna ports in total on the SRS resource, which are multiplexed into s groups of OFDM symbols. The SRS antenna ports included in any two OFDM symbols in each group of the s groups of OFDM symbols are the same, and the number of SRS ports mapped on each OFDM symbol is the same, which is $\frac{N}{s}$. Then, according to the SRS power control method in the related art, the transmission power of the SRS on each OFDM symbol is $\frac{s}{N} P_{SRS}$, where $P_{SRS}$ is the transmission power of the SRS resource. However, for the UE, the maximum transmission power of each Power Amplifier (PA) of the UE may be greater than $\frac{s}{N} P_{CMAX}$, where $P_{CMAX}$ is the maximum output power of the terminal. As a result, the PA capability of the terminal cannot be fully utilized, and the SRS transmission cannot achieve optimal performance.

To solve the above problem, an embodiment of the present disclosure provides an SRS transmission method, which determines the transmission power of an SRS antenna port of an SRS resource based on a first factor and a first power. In this way, the transmission power of the SRS antenna port is adjusted or scaled by the first factor to improve the transmission performance of the SRS resource, and the determined transmission power of the SRS antenna port matches the PA capability of the terminal, ensuring that the SRS transmission achieves optimal performance.

FIG. 2 is a schematic flowchart of an SRS transmission method according to an embodiment of the present disclosure. The transmission method according to this embodiment includes:

S210. determine the transmission power of an SRS antenna port of a first SRS resource based on a first factor and a first power;

S220. transmit the SRS based on the transmission power of the SRS antenna port of the first SRS resource;

The first power is a power determined based on one or more of the following parameters: a maximum output power corresponding to SRS transmission; a maximum output power corresponding to uplink transmission; path-loss information; resource allocation information; or a target power.

Optionally, the resource allocation information is the resource allocation information of the first SRS resource indicated by the base station to the UE, that is, the resource allocation information is the information used by the base station to allocate resources for the first SRS resource.

Optionally, the resource allocation information is the resource allocation information of the resource set where the first SRS resource of the UE is located as indicated by the base station. Optionally, the resource allocation information is information determined by the UE itself.

Optionally, the target power is the target power corresponding to the first SRS resource. Optionally, the target power is the target power corresponding to uplink transmission.

Optionally, the path-loss information is reference signal indication information used to determine the path loss. Optionally, the path-loss information is information about the path loss corresponding to the first SRS resource determined by the terminal, or information about the path loss corresponding to the antenna port of the first SRS resource.

By using the SRS transmission method according to the embodiment of the present disclosure, the transmission power of the SRS antenna port of the first SRS resource is determined based on the first factor and the first power, so that the transmission power of the SRS antenna port of the first SRS resource is adjusted and scaled by the first factor, thereby improving the transmission performance of the SRS resource.

In an embodiment of the present disclosure, optionally, the method further includes: determining the first factor according to one or more of the following information: terminal capability; indication information sent by a base station; or first information, where the first information is related to the first SRS resource.

Optionally, the terminal capability is a capability related to the transmit power of the SRS resource, or a capability related to the PA transmit power of the terminal.

In one implementation, when the first factor is determined based on the indication information sent by the base station, the indication information may be used to indicate one or more of a power scaling factor, a factor configured for the SRS resource, and a factor configured for the first OFDM symbol. That is, the indicated first factor may include one or more of a power scaling factor, a factor configured for the SRS resource, and a factor configured for the first OFDM symbol.

In another implementation, the first factor is determined based on first information, and the first information includes one or more of the following parameters: the number of SRS antenna ports included in the first SRS resource; a time-division multiplexing factor of the first SRS resource; the number of first time-domain resources occupied by the first SRS resource within one second time-domain resource; the number of first time-domain resources occupied by one SRS port of the first SRS resource within one second time-domain resource; a repetition factor of the first SRS resource; a frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

Optionally, in this embodiment of the present disclosure, the first time-domain resource includes, but is not limited to, only OFDM symbols; the second time-domain resource includes, but is not limited to, only slots. For example, the second time-domain resource may also be a subframe, a radio frame, or the like.

Optionally, when the first factor is determined based on the first information, the first factor may be determined based on one of the following parameters:

a time-division multiplexing factor s of the first SRS resource; a ratio of the number of SRS antenna ports included in the first SRS resource to the time-domain multiplexing factor of the SRS resource, such as $\frac{N}{s}$ or $\frac{s}{N}$; a ratio of the number m of OFDM symbols occupied by the first SRS resource in one slot to the number m1 of OFDM symbols occupied by one SRS port of the first SRS resource in one slot, such as $\frac{N \cdot m}{m1}$ or $\frac{m1}{N \cdot m}$; a ratio of the product of the number N of SRS antenna ports included in the first SRS resource and the number m of OFDM symbols occupied by the first SRS resource in one slot to the number m1 of OFDM symbols occupied by one SRS port of the first SRS resource in one slot; such as $\frac{N \cdot m}{m1}$ or $\frac{m1}{N \cdot m}$ the

number m1 of OFDM symbols occupied by one SRS port of the first SRS resource in one slot; the number n of SRS antenna ports in the first SRS resource included in one OFDM symbol; a ratio of the number N of SRS antenna ports included in the first SRS resource to the number n of SRS antenna ports in the first SRS resource included in one OFDM symbol, such as $\frac{N}{n}$ or $\frac{n}{N}$; a ratio of the number m of OFDM symbols occupied by the first SRS resource in one slot to the repetition factor R of the first SRS resource, such as $\frac{m}{R}$ or $\frac{R}{m}$; a ratio of the product of the number N of SRS antenna ports included in the first SRS resource and the number m of OFDM symbols occupied by the first SRS resource in one slot to the repetition factor R of the first SRS resource, such as $\frac{N \cdot m}{R}$ or $\frac{R}{N \cdot m}$; a ratio of the product of the repetition factor R of the first SRS resource and the frequency hopping factor h of the first SRS resource to the number m of OFDM symbols occupied by the first SRS resource in one slot, such as $\frac{m}{R \cdot h}$ or $\frac{R \cdot h}{m}$; a ratio of the product of the number N of SRS antenna ports included in the first SRS resource and the number m of OFDM symbols occupied by the first SRS resource in one slot to the product of the repetition factor R of the first SRS resource and the frequency hopping factor h of the first SRS resource, such as $\frac{N \cdot m}{R \cdot h}$ or $\frac{R \cdot h}{N \cdot m}$.

Optionally, when the first factor is determined based on the first information, the first factor may be determined based on one of the following parameters:

$s$; $\frac{N}{s}$ or $\frac{s}{N}$; $\frac{m}{m1}$; or $\frac{m1}{m}$; $\frac{N \cdot m}{m1}$ or $\frac{m1}{N \cdot m}$; m1; n; $\frac{N}{n}$ or $\frac{n}{N}$; $\frac{m}{R}$; or $\frac{R}{m}$; $\frac{N \cdot m}{R}$ or $\frac{R}{N \cdot m}$; $\frac{m}{R \cdot h}$ or $\frac{R \cdot h}{m}$; $\frac{N \cdot m}{R \cdot h}$ or $\frac{R \cdot h}{N \cdot m}$.

Optionally, the first factor is a factor greater than 1. For example, s is one of the following:

the one greater than 1 between $\frac{N}{s}$ and $\frac{s}{N}$; the one greater than 1 between $\frac{m}{m1}$ and $\frac{m1}{m}$; the one greater than 1 between $\frac{N \cdot m}{m1}$ and $\frac{m1}{N \cdot m}$; m1; n; the one greater than 1 between $\frac{N}{n}$ and $\frac{n}{N}$; the one greater than 1 between $\frac{m}{R}$ and $\frac{R}{m}$; the one greater than 1 between $\frac{N \cdot m}{R}$ and $\frac{R}{N \cdot m}$; the one greater than 1 between $\frac{m}{R \cdot h}$ and $\frac{R \cdot h}{m}$; the one greater than 1 between $\frac{N \cdot m}{R \cdot h}$ and $\frac{R \cdot h}{N \cdot m}$.

When the value of the first factor is s or the reciprocal of s, since the number of SRS antenna ports of the first SRS resource included in each OFDM symbol is s times the total number of SRS antenna ports of the first SRS resource, using s or the reciprocal of s as the first factor can be used to increase the transmit power of the SRS antenna port by s times.

When the value of the first factor is $\frac{N}{s}$ or $\frac{s}{N}$, the first factor is considered according to the relationship between the total number of antenna ports of the SRS resource and the number of SRS antenna ports on each OFDM symbol, and can be used to directly obtain the transmission power of a single SRS antenna port.

When the value of the first factor is another value, it also considers how to transmit the transmission power of the SRS, and the specific reason will not be repeated.

It should be noted that the above method for determining the first factor is only an example, and is not specifically limited thereto.

In an embodiment of the present disclosure, optionally, the first power includes one or more of the following: a maximum output power $P_{CMAX,f,c}(i)$ corresponding to SRS transmission; a maximum output power $P_{CMAX}(i)$ corresponding to uplink transmission; a third power $P_{SRS,q_s}$; a power determined based on the minimum value between the third power $P_{SRS,q_s}$ and the maximum output power $P_{CMAX,f,c}(i)$ corresponding to SRS transmission; or a power determined based on the minimum value between the third power $P_{SRS,q_s}$ and the maximum output power $P_{CMAX}(i)$ corresponding to uplink transmission. The third power $P_{SRS,q_s}$ is a power determined based on at least one of the path-loss information, the resource allocation information, and the target power.

Optionally, the maximum output power corresponding to SRS transmission is the maximum transmission power corresponding to the first SRS resource. Optionally, the maximum output power corresponding to SRS transmission is applicable to a certain type of SRS resource, or all SRS resources.

Optionally, the maximum output power corresponding to uplink transmission is the maximum output power applicable to multiple uplink transmissions such as Physical Uplink Shared Channel (PUSCH), Physical Uplink Control Channel (PUCCH), and SRS.

Optionally, the maximum output power corresponding to SRS transmission is determined by the UE based on the configuration of the base station, or configured by the base station for the UE and/or determined based on the power level of the UE.

Optionally, the maximum output power corresponding to uplink transmission is determined by the UE based on the configuration of the base station, or configured by the base station for the UE and/or determined based on the power level of the UE.

Optionally, the maximum output power corresponding to uplink transmission and the maximum output power corresponding to SRS transmission are two different powers.

In this embodiment of the present disclosure, optionally, the mentioned resource allocation includes, but is not limited to, only the resource allocation of the first SRS resource set where the first SRS resource is located and/or the resource allocation of the first SRS resource.

Optionally, the third power $P_{SRS,q_s}$ can be determined according to the following Formula 1:

Formula 1:

$$P_{SRS,q_s} = P_{O_{SRS,b,f,c}}(q_s) + 10\log_{10}\left(2^\mu \cdot M_{SRS,b,f,c}(i)\right) + \alpha_{SRS,b,f,c}(i) \cdot PL_{b,f,c}(q_s) +$$
$$h_{b,f,c}(i,l);$$

where $q_s$ is the index of the first SRS resource; c is the serving cell identifier of the first SRS resource; f is the carrier for transmitting the first SRS resource; b is the uplink bandwidth part (UL BWP) for transmitting the first SRS resource; i is the transmission occasion of the first SRS resource; in the above formula, c represents the serving cell index, f represents the carrier index, b is the BWP index, and $q_s$ is the SRS resource or SRS resource set index. $P_{O_{SRS,b,f,c}}(q_s)$ is the target power, $M_{SRS,b,f,c}(i)$ is the SRS bandwidth represented by the number of actual resource blocks transmitted by the SRS on the activated UL BWP of the carrier f of the serving cell c (that is, resource allocation information); $\alpha_{SRS,b,f,c}(i)$ is the path loss factor estimated by alpha, $PL_{b,f,c}(q_s)$ is the downlink path loss estimated by the UE, $h_{b,f,c}(i, l)$ is the adjustment factor, and $\mu$ is the factor related to subcarrier spacing or numerology.

In the embodiment of the present disclosure, in step S220, determining the transmission power of an SRS antenna port of a first SRS resource based on a first factor and a first power includes:

determining the total transmission power corresponding to the first SRS resource based on the first factor and the first power; determining the transmission power of the SRS antenna port of the first SRS resource based on the total transmission power corresponding to the first SRS resource; or,

determining the transmission power of the SRS antenna port of the first SRS resource based on the operation of the first factor and the first power; or,

determining the transmission power corresponding to the first SRS resource on a first time-domain resource based on the first factor and the first power; determining the transmission power of the SRS antenna port of the first SRS resource on the first time-domain resource based on the transmission power corresponding to the first SRS resource on the first time-domain resource; or,

determining the transmission power of the SRS antenna port of the first SRS resource on the first time-domain resource based on the first factor and the first power.

Optionally, determining the total transmission power corresponding to the first SRS resource based on the first factor and the first power includes: determining the total transmission power corresponding to the first SRS resource by performing an operation on the first factor and the first power; and/or,

determining the transmission power corresponding to the first SRS resource on a first time-domain resource based on the first factor and the first power includes: determining the transmission power corresponding to the first SRS resource on the first time-domain resource by performing an operation on the first factor and the first power; and/or, determining the transmission power of the SRS antenna port of the first SRS resource on the first time-domain resource based on the first factor and the first power includes: determining the transmission power of the SRS antenna port of the first SRS resource on the first time-domain resource by performing an operation on the first factor and the first power.

Optionally, the first SRS resource is transmitted on multiple first time-domain resources, and determining the transmission power of the SRS antenna port of the first SRS resource on the first time-domain resource based on the first factor and the first power includes:

for a given time-domain resource among the multiple first time-domain resources, equally splitting the first power across the SRS antenna ports on the given first time-domain resource, where the first factor is determined based on first information, and the first information is the number of SRS antenna ports in the first SRS resource included in the given first time-domain resource. Optionally, the given first time-domain resource is a given OFDM symbol, and the first information is the number of SRS antenna ports in the first SRS resource included in the OFDM symbol.

Optionally, the first SRS resource is transmitted on multiple OFDM symbols, and the first time-domain resource is an OFDM symbol; or the first SRS resource is transmitted on multiple OFDM symbol groups, and the first time-domain resource is an OFDM symbol group.

In an embodiment of the present disclosure, optionally, the method further includes: performing an operation on the first factor and the first power in one of the following manners:

scaling the linear value of the first power using the first factor; scaling the linear value of the first power using the reciprocal of the first factor; summing the power value corresponding to the first factor and the power value of the first power; subtracting the power value corresponding to the first factor from the power value of the first power; multiplying the first factor by the linear value of the first power; dividing the linear value of the first power by the first factor.

It should be noted that, in one implementation, optionally, the unit of the first power is dBm. When the first factor is greater than or equal to 1, the first factor is multiplied by the linear value of the first power, and the linear value of the first power is scaled by the first factor to increase the linear value of the first power, thereby increasing the transmission power of the SRS antenna port of the first SRS resource.

In another implementation, optionally, the unit of the first power is dBm. When the first factor is less than 1, the reciprocal of the first factor is multiplied by the linear value of the first power, and the linear value of the first power is scaled by the reciprocal of the first factor to increase the linear value of the first power, thereby increasing the transmission power of the SRS antenna port of the first SRS resource.

In another implementation, optionally, the unit of the first power is dBm. When the first factor is less than 1, the linear value of the first power is increased by dividing the linear value of the first power by the first factor, thereby increasing the transmission power of the SRS antenna port of the first SRS resource.

In another implementation, optionally, the unit of the first power is dBm. The first factor is converted into a corresponding power value, for example, the first factor is converted by using $\log_{10}(\alpha)$. If the converted power value is greater than 0, it is summed with the power value of the first power to increase the power value of the first power, thereby increasing the transmission power of the SRS antenna port of the first SRS resource.

In another implementation, optionally, the unit of the first power is dBm. The first factor is converted into a corresponding power value, for example, the first factor is converted by using $\log_{10}(\alpha)$. When the converted power value is less than 0, the power value of the first power is subtracted from the power value corresponding to the first factor to increase the power value of the first power and increase the transmission power of the SRS antenna port of the first SRS resource.

The following describes the method for determining the transmission power of the SRS antenna port of the first SRS resource when the first power has different power values in the SRS transmission method according to the embodiments of the present disclosure with reference to specific implementations.

Implementation 1

In this implementation 1, the first power includes two power values, and optionally includes the maximum output power $P_{CMAX}(i)$ corresponding to uplink transmission and the third power $P_{SRS,q_s}$.

The third power $P_{SRS,q_s}$ is determined according to Formula I, i.e., determined based on path-loss information, resource allocation information, and a target power.

Optionally, the maximum output power $P_{CMAX}(i)$ corresponding to uplink transmission is determined by the UE based on the configuration information of the base station, and/or determined by the UE based on its own capability (e.g., power level).

In this implementation 1, there is at least one first factor, such as including factors $\alpha$ and $\beta$. In this implementation, in step S210, determining the transmission power of the SRS antenna port of the first SRS resource based on the first factor and the first power includes:

obtaining a fourth power $P_4$ based on an operation between one first factor $\alpha$ and one first power (e.g., $P_{CMAX}(i)$); i.e., $P_4 = \alpha \cdot P_{CMAX}(i)$; obtaining a fifth power $P_5$ based on an operation between one first factor $\beta$ and another first power (e.g., the third power $P_{SRS,q_s}$); i.e., $P_5 = \beta \cdot P_{SRS,q_s}$; determining the transmission power of the SRS antenna port of the first SRS resource based on the minimum value between the fourth power $P_4$ and the fifth power $P_5$.

Optionally, determining the transmission power of the SRS antenna port of the first SRS resource based on the minimum value between the fourth power $P_4$ and the fifth power $P_5$ includes:

determining the total transmission power corresponding to the first SRS resource based on the minimum value between the fourth power $P_4$ and the fifth power $P_5$; determining the transmission power of the SRS antenna port of the first SRS resource based on the total transmission power corresponding to the first SRS resource.

In this implementation 1, the total transmission power $P_{SRS,b,f,c}(i, q_s, l)$ corresponding to the first SRS resource can be expressed by the following Formula 2:

Formula 2:

$$P_{SRS,b,f,c}(i,q_s,l) =$$

$$min \begin{cases} \alpha \cdot P_{CMAX}(i) \\ \beta \cdot \left( \begin{array}{c} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{array} \right) \end{cases}$$

In this implementation, optionally, determining the transmission power of the SRS antenna port of the first SRS resource based on the total transmission power corresponding to the first SRS resource includes:
equally splitting the total transmission power $P_{SRS,b,f,c}(i,q_s, l)$ corresponding to the first SRS resource across all SRS antenna ports in the first SRS resource, and using the power allocated to each SRS antenna port as the transmission power of each SRS antenna port of the first SRS resource. That is, when the number of SRS antenna ports in the first SRS resource is N, the transmission power of each SRS antenna port of the first SRS resource is: $\frac{P_{SRS,b,f,c}(i,q_s,l)}{N}$ .

In another embodiment, optionally, determining the transmission power of the SRS antenna port of the first SRS resource based on the minimum value between the fourth power $P_4$ and the fifth power $P_5$ includes:
determining the transmission power corresponding to the first SRS resource on a first time-domain resource based on the minimum value between the fourth power $P_4$ and the fifth power $P_5$; determining the transmission power of the SRS antenna port of the first SRS resource on the first time-domain resource based on the transmission power corresponding to the first SRS resource on the first time-domain resource.

The time-domain resource includes, but is not limited to, one or more of the following types: slot, OFDM symbol, subframe, and radio frame. Optionally, the first time-domain resource may include a first OFDM symbol, and the transmission power corresponding to the first SRS resource on the first time-domain resource may be the transmission power corresponding to the first SRS resource on the first OFDM symbol.

Optionally, determining the transmission power of the SRS antenna port of the first SRS resource on the first time-domain resource based on the transmission power corresponding to the first SRS resource on the first time-domain resource includes:
for a given time-domain resource among the multiple first time-domain resources, equally splitting the transmission power corresponding to the first SRS resource on the first time-domain resource across the SRS antenna ports on the given first time-domain resource, where the first factor is determined based on first information, and the first information is the number of SRS antenna ports in the first SRS resource included in the given first time-domain resource. Optionally, the given first time-domain resource is a given OFDM symbol, and the first information is the number of SRS antenna ports in the first SRS resource included in the OFDM symbol.

Taking the first time-domain resource including OFDM symbols as an example, determining the transmission power corresponding to the first SRS resource on the first time-domain resource based on the minimum value between the fourth power $P_4$ and the fifth power $P_5$ may specifically be:
determining the transmission power corresponding to the first SRS resource on one OFDM symbol (e.g., OFDM symbol 1) based on the minimum value between the fourth power $P_4$ and the fifth power $P_5$.

Optionally, the first SRS resource is transmitted on multiple OFDM symbols, and the first time-domain resource is an OFDM symbol; or
the first SRS resource is transmitted on multiple OFDM symbol groups, and the first time-domain resource is an OFDM symbol group.

Determining the transmission power of the SRS antenna port of the first SRS resource on the first time-domain resource based on the transmission power corresponding to the first SRS resource on the first time-domain resource may specifically be:
determining the transmission power of the SRS antenna port of the first SRS resource on the OFDM symbol (e.g., OFDM symbol 1) based on the transmission power corresponding to the first SRS resource on the OFDM symbol (e.g., OFDM symbol 1).

Based on this method, the transmission power of the SRS antenna ports on the multiple OFDM symbols can be determined respectively for the multiple OFDM symbols. For multiple groups of OFDM symbols, the transmission power of the SRS antenna ports on each group of OFDM symbols can also be determined respectively.

In this implementation, determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Specifically, when the number of SRS antenna ports in the first SRS resource is $N$ and the transmission power corresponding to the first SRS resource on the first time-domain resource is $P_{SRS,b,f,c}(i, q_s, l)$, the transmission power of the SRS antenna port of the first SRS resource on the first time-domain resource is determined as $\frac{P_{SRS,b,f,c}(i,q_s,l)}{N}$.

It should be noted that in this implementation 1, the first power may further include the maximum output power $P_{CMAX,f,c}(i)$ and the third power $P_{SRS,q_s}$ corresponding to SRS transmission; when the first power includes the maximum output power $P_{CMAX,f,c}(i)$ and the third power $P_{SRS,q_s}$ corresponding to SRS transmission: obtaining a fourth power $P_4$ based on an operation between one first factor $\alpha$ and the maximum output power $P_{CMAX,f,c}(i)$ corresponding to SRS transmission; i.e., $P_4 = \alpha \cdot P_{CMAX,f,c}(i)$; obtaining a fifth power $P_5$ based on an operation between one first factor $\beta$ and another first power (e.g., the third power $P_{SRS,q_s}$); i.e., $P_5 = \beta \cdot P_{SRS,q_s}$; determining the transmission power of the SRS antenna port of the first SRS resource based on the minimum value between the fourth power $P_4$ and the fifth power $P_5$.

Optionally, determining the transmission power of the SRS antenna port of the first SRS resource based on the minimum value between the fourth power $P_4$ and the fifth power $P_5$ includes:

determining the total transmission power corresponding to the first SRS resource based on the minimum value between the fourth power $P_4$ and the fifth power $P_5$; determining the transmission power of the SRS antenna port of the first SRS resource based on the total transmission power corresponding to the first SRS resource.

Specifically, the total transmission power $P_{SRS,b,f,c}(i, q_s, l)$ corresponding to the first SRS resource can be expressed by the following formula:

$$P_{SRS,b,f,c}(i, q_s, l) =$$

$$\min\begin{cases} \alpha \cdot P_{CMAX,f,c}(i) \\ \beta \cdot \left( \begin{array}{c} P_{O_{SRS,b,f,c}}(q_s) + 10 \log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{array} \right) \end{cases}$$

In this way, the total transmission power $P_{SRS,b,f,c}(i, q_s, l)$ corresponding to the first SRS resource is equally split across all SRS antenna ports in the first SRS resource, and the allocated power is used as the transmission power of each SRS antenna port of the first SRS resource.

It should be noted that in the embodiments of the present disclosure, the operation mode between the first factor and the first power is described by scaling the linear value of the first power using the first factor. As described above, there may be multiple operation modes between the first factor and the first power, and each operation mode will not be exemplified separately herein.

In this implementation, after performing operations on at least two first powers based on the first factor respectively, the transmission power of the SRS antenna port of the first SRS resource can be determined. In this way, different solutions can be used to increase the SRS power, thereby enhancing the flexibility of determining the SRS transmission power and improving the SRS transmission performance. This implementation can be applied to scenarios where some PAs of the terminal reach the maximum transmit power and other PAs do not reach the maximum transmit power.

Optionally, the first factors used for performing operations on the at least two first powers may be the same or different.

Implementation 2

In this implementation 2, in step S210, determining the transmission power of the SRS antenna port of the first SRS resource based on the first factor and the first power includes:

determining a sixth power based on the first factor and the first power; determining the transmission power of the SRS antenna port of the first SRS resource based on the sixth power and a seventh power; the seventh power is a power determined based on one or more of the following parameters:

maximum output power corresponding to SRS transmission; maximum output power corresponding to uplink transmission; path-loss information; resource allocation information; or a target power.

Optionally, determining a sixth power based on the first factor and the first power includes: determining the sixth power by performing an operation between the first factor and the first power.

Optionally, determining the total transmission power corresponding to the first SRS resource based on the first factor and the first power includes: determining the total transmission power corresponding to the first SRS resource by performing an operation between the first factor and the first power; and/or,

determining the transmission power corresponding to the first SRS resource on the first time-domain resource based on the first factor and the first power includes: determining the transmission power corresponding to the first SRS resource on the first time-domain resource by performing an operation between the first factor and the first power.

It should be noted that the parameters used to determine the seventh power are different from the parameters used to determine the first power.

In this implementation 2, optionally, the first power includes the maximum output power $P_{CMAX,f,c}(i)$ corresponding to SRS transmission or the maximum output power $P_{CMAX}(i)$ corresponding to uplink transmission.

Taking the case where the first power includes the maximum output power $P_{CMAX}(i)$ corresponding to uplink transmission as an example, the sixth power is determined based on the first factor $\alpha$ and the first power $P_{CMAX}(i)$, i.e., the sixth power is determined as: $\alpha \cdot P_{CMAX}(i)$; when determining the transmission power of the SRS antenna port of the first SRS resource based on the sixth power and the seventh power, the seventh power is $P_{SRS,q_s}$, and determining the transmission power of the SRS antenna port of the first SRS resource based on the sixth power and the seventh power includes:

determining the total transmission power corresponding to the first SRS resource based on the sixth power and the seventh power; determining the transmission power of the SRS antenna port of the first SRS resource based on the total transmission power corresponding to the first SRS resource; or

determining the transmission power corresponding to the first SRS resource on the first time-domain resource based on the sixth power and the seventh power; determining the transmission power of the SRS antenna port of the first SRS resource on the first time-domain resource based on the transmission power corresponding to the first SRS resource on the first time-domain resource.

Optionally, the seventh power is determined according to the aforementioned formula 1. Based on the sixth power and the seventh power, the total transmission power $P_{SRS,b,f,c}(i, q_s, l)$ corresponding to the first SRS resource or the transmission power $P_{SRS,b,f,c}(i, q_s, l)$ corresponding to the first SRS resource on the first time-domain resource can be determined according to the following formula 3:

formula 3:

$$P_{SRS,b,f,c}(i, q_s, l) = min \left\{ \begin{array}{c} \alpha \cdot P_{CMAX}(i) \\ \left( \begin{array}{c} P_{0_{SRS,b,f,c}}(q_s) + 10 \log_{10}\left( 2^{\mu} \cdot M_{SRS,b,f,c}(i) \right) \\ + \alpha_{SRS,b,f,c}(i) \cdot PL_{b,f,c}(q_s) + h_{b,f,c}(i, l) \end{array} \right) \end{array} \right.$$

That is, the total transmission power $P_{SRS,b,f,c}(i, q_s, l)$ corresponding to the first SRS resource or the transmission power $P_{SRS,b,f,c}(i, q_s, l)$ corresponding to the first SRS resource on the first time-domain resource is the minimum value between the sixth power and the seventh power.

In this implementation, optionally, determining the transmission power of the SRS antenna port of the first SRS resource based on the total transmission power corresponding to the first SRS resource includes:

equally splitting the total transmission power $P_{SRS,b,f,c}(i, q_s, l)$ corresponding to the first SRS resource across all SRS antenna ports in the first SRS resource, and using the power allocated to each SRS antenna port as the transmission power of each SRS antenna port of the first SRS resource. That is, when the number of SRS antenna ports in the first SRS resource is N, the transmission power of each SRS antenna port of the first SRS resource is: $\frac{P_{SRS,b,f,c}(i,q_s,l)}{N}$.

In this implementation, optionally, determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Specifically, when the number of SRS antenna ports in the first SRS resource is N and the transmission power

16

corresponding to the first SRS resource on the first time-domain resource is $P_{SRS,b,f,c}(i, q_s, l)$, the transmission power of the SRS antenna port of the first SRS resource on the first time-domain resource is determined as $\frac{P_{SRS,b,f,c}(i,q_s,l)}{N}$.

It should be noted that in this implementation 2, similarly, the first power may alternatively be the maximum output power $P_{CMAX,f,c}(i)$ corresponding to SRS transmission. When the first power is the maximum output power $P_{CMAX,f,c}(i)$ corresponding to SRS transmission, the total transmission power $P_{SRS,b,f,c}(i, q_s, l)$ corresponding to the first SRS resource can be:

$$P_{SRS,b,f,c}(i,q_s,l) = min \begin{cases} \alpha \cdot P_{CMAX,f,c}(i) \\ \begin{pmatrix} P_{O_{SRS,b,f,c}}(q_s) + 10\log_{10}\left(2^{\mu} \cdot M_{SRS,b,f,c}(i)\right) \\ +\alpha_{SRS,b,f,c}(i) \cdot PL_{b,f,c}(q_s) + h_{b,f,c}(i,l) \end{pmatrix}; \end{cases}$$

by determining the sixth power based on the first factor $\alpha$ and the maximum output power $P_{CMAX,f,c}(i)$ corresponding to SRS transmission, the total transmission power $P_{SRS,b,f,c}(i, q_s, l)$ corresponding to the first SRS resource can be determined based on the sixth power and the third power determined according to Formula I.

It should be noted that in the embodiments of the present disclosure, the operation mode between the first factor and the first power is described by scaling the linear value of the first power using the first factor. As described above, there may be multiple operation modes between the first factor and the first power, and each operation mode will not be exemplified separately herein.

In this implementation, the first factor is used to perform an operation with the maximum output power $P_{CMAX,f,c}(i)$ corresponding to SRS transmission or the maximum output power $P_{CMAX}(i)$ corresponding to uplink transmission. After increasing the maximum output power $P_{CMAX,f,c}(i)$ corresponding to SRS transmission or the maximum output power $P_{CMAX}(i)$ corresponding to uplink transmission, the transmission power of the SRS antenna port of the first SRS resource is determined based on the increased maximum output power $P_{CMAX,f,c}(i)$ corresponding to SRS transmission or the increased maximum output power $P_{CMAX}(i)$ corresponding to uplink transmission, thereby improving the SRS transmission performance. This implementation can increase the SRS power based on the PA capability of the terminal when the terminal is at the cell edge or the UE channel quality is poor.

Implementation 3

In this implementation 3, in step S210, determining the transmission power of the SRS antenna port of the first SRS resource based on the first factor and the first power includes:
determining a sixth power based on the first factor and the first power; determining the transmission power of the SRS antenna port of the first SRS resource based on the sixth power and a seventh power; the seventh power is a power determined based on one or more of the following parameters: maximum output power corresponding to SRS transmission; maximum output power corresponding to uplink transmission; path-loss information; resource allocation information; or a target power.

It should be noted that the parameters used to determine the seventh power are different from the parameters used to determine the first power.

In this implementation 3, optionally, the first power is the third power, i.e., $P_{SRS,q_s}$ determined according to Formula 1. Then, the sixth power is determined based on the first factor and the first power as: $\alpha \cdot P_{SRS,q_s}$.

In this embodiment, the seventh power is the maximum output power $P_{CMAX,f,c}(i)$ corresponding to SRS transmission or the maximum output power $P_{CMAX}(i)$ corresponding to uplink transmission.

Determining the transmission power of the SRS antenna port of the first SRS resource based on the sixth power and the seventh power includes:

determining the total transmission power corresponding to the first SRS resource based on the sixth power and the seventh power; determining the transmission power of the SRS antenna port of the first SRS resource based on the total transmission power corresponding to the first SRS resource; or
determining the transmission power corresponding to the first SRS resource on the first time-domain resource based on the sixth power and the seventh power; determining the transmission power of the SRS antenna port of the first SRS resource on the first time-domain resource based on the transmission power corresponding to the first SRS resource on the first time-domain resource.

In this implementation, taking the case where the seventh power is the maximum output power $P_{CMAX,f,c}(i)$ corresponding to SRS transmission as an example, based on the sixth power and the seventh power, the total transmission power $P_{SRS,b,f,c}(i, q_s, l)$ corresponding to the first SRS resource or the transmission power $P_{SRS,b,f,c}(i, q_s, l)$ corresponding to the first SRS resource on the first time-domain resource can be determined according to the following Formula 4:

Formula 4:

$$P_{SRS,b,f,c}(i,q_s,l) = min \begin{cases} P_{CMAX}(i) \\ \alpha \cdot \left( \begin{array}{l} P_{O_{SRS,b,f,c}}(q_s) + 10 \log_{10}\left(2^\mu \cdot M_{SRS,b,f,c}(i)\right); \\ + \alpha_{SRS,b,f,c}(i) \cdot PL_{b,f,c}(q_s) + h_{b,f,c}(i,l) \end{array} \right) \end{cases}$$

that is, the total transmission power $P_{SRS,b,f,c}(i, q_s, l)$ corresponding to the first SRS resource or the transmission power $P_{SRS,b,f,c}(i, q_s, l)$ corresponding to the first SRS resource on the first time-domain resource is the minimum value between the sixth power and the seventh power.

In this implementation, optionally, determining the transmission power of the SRS antenna port of the first SRS resource based on the total transmission power corresponding to the first SRS resource includes:

equally splitting the total transmission power $P_{SRS,b,f,c}(i, q_s, l)$ corresponding to the first SRS resource across all SRS antenna ports in the first SRS resource, and using the power allocated to each SRS antenna port as the transmission power of each SRS antenna port of the first SRS resource. That is, when the number of SRS antenna ports in the first SRS resource is $N$, the transmission power of each SRS antenna port of the first SRS resource is: $\frac{P_{SRS,b,f,c}(i,q_s,l)}{N}$.

In this implementation, optionally, determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Specifically, when the number of SRS antenna ports in the first SRS resource is $N$ and the transmission power corresponding to the first SRS resource on the first time-domain resource is $P_{SRS,b,f,c}(i, q_s, l)$, the transmission power of the SRS antenna port of the first SRS resource on the first time-domain resource is determined as $\frac{P_{SRS,b,f,c}(i,q_s,l)}{N}$.

Optionally, the seventh power may alternatively be the maximum output power $P_{CMAX,f,c}(i)$ corresponding to SRS transmission. The specific method for determining the transmission power of the SRS antenna port of the first SRS resource is the same as the method for determining the transmission power of the SRS antenna port of the first SRS resource when the seventh power is the maximum output power $P_{CMAX}(i)$ corresponding to uplink transmission, and will not be repeated herein.

It should be noted that in the embodiments of the present disclosure, the operation mode between the first factor and the first power is described by scaling the linear value of the first power using the first factor. As described above, there may be multiple operation modes between the first factor and the first power, and each operation mode will not be exemplified separately herein.

In this implementation, the first factor is used to perform an operation with the third power determined based on at least one of path loss reference signal, resource allocation, and a target power. After increasing the third power, the transmission power of the SRS antenna port of the first SRS resource is determined based on the increased third power, thereby improving the SRS transmission performance. In this implementation, when the transmission power of the first SRS resource does not reach the maximum transmit power, the SRS power can be increased by performing an operation with the first factor, thereby improving the SRS transmission performance.

Implementation 4

In this implementation 4, the first power includes a power determined based on the minimum value between the third power and the maximum output power $P_{CMAX,f,c}(i)$ corresponding to SRS transmission; or a power determined based on the minimum value between the third power and the maximum output power $P_{CMAX}(i)$ corresponding to uplink transmission; wherein the third power is a power determined based on at least one of the path-loss information, the resource allocation information, and the target power, i.e., $P_{SRS,q_s}$ determined according to Formula 1.

Taking the case where the first power includes a power determined based on the minimum value between the third power and the maximum output power $P_{CMAX}(i)$ corresponding to uplink transmission as an example, the first power

$P_1$ is determined according to the following Formula 5:

$$P_1 = min \left\{ \begin{array}{c} P_{CMAX}(i) \\ \left( P_{O_{SRS,b,f,c}}(q_s) + 10\log_{10}\left(2^\mu \cdot M_{SRS,b,f,c}(i)\right) \right) ; \\ +\alpha_{SRS,b,f,c}(i) \cdot PL_{b,f,c}(q_s) + h_{b,f,c}(i,l) \end{array} \right\}$$

in this implementation, the transmission power of the SRS antenna port of the first SRS resource is determined based on the first factor $\alpha$ and the determined first power $P_1$; or the transmission power of the SRS antenna port of the first SRS resource on the first time-domain resource is determined based on an operation between the first factor and the first power.

In one implementation, the linear value of the first power is scaled using the first factor, or the first factor is multiplied by the linear value of the first power, to perform an operation between the first factor $\alpha$ and the determined first power $P_1$.

In one implementation, optionally, determining the transmission power of the SRS antenna port of the first SRS resource based on the first factor $\alpha$ and the determined first power $P_1$ includes:

performing an operation between the first factor $\alpha$ and the first power $P_1$ (e.g., multiplying the first factor $\alpha$ by the linear value of the first power $P_1$ to obtain a power value), and equally splitting this power value across all SRS antenna ports in the first SRS resource, using the power allocated to each SRS antenna port as the transmission power of each SRS antenna port of the first SRS resource.

In another implementation, optionally, determining the transmission power of the SRS antenna port of the first SRS resource on the first time-domain resource based on the operation between the first factor and the first power includes:

performing an operation between the first factor $\alpha$ and the first power $P_1$ (e.g., multiplying the first factor $\alpha$ by the linear value of the first power $P_1$ to obtain a power value), and equally splitting this power value across the SRS antenna ports of the first SRS resource on the first time-domain resource, using the power allocated to each SRS antenna port as the transmission power of each SRS antenna port of the first SRS resource on the first time-domain resource.

Optionally, the first power may alternatively include a power determined based on the minimum value between the third power and the maximum output power $P_{CMAX,f,c}(i)$ corresponding to SRS transmission. When the first power includes a power determined based on the minimum value between the third power and the maximum output power $P_{CMAX,f,c}(i)$ corresponding to SRS transmission, the method for determining the transmission power of the SRS antenna port of the first SRS resource and the transmission power of the SRS antenna port of the first SRS resource on the first time-domain resource is the same as the method for determining the transmission power of the SRS antenna port of the first SRS resource and the transmission power of the SRS antenna port of the first SRS resource on the first time-domain resource when the first power includes a power determined based on the minimum value between the third power and the maximum output power $P_{CMAX}(i)$ corresponding to uplink transmission, and will not be repeated herein.

In addition, it should be noted that in the embodiments of the present disclosure, the operation mode between the first factor and the first power is described by scaling the linear value of the first power using the first factor. As described above, there may be multiple operation modes between the first factor and the first power, and each operation mode will not be exemplified separately herein.

In this implementation, the first factor is used to perform an operation with the power determined based on the minimum value between the third power and the maximum output power $P_{CMAX,f,c}(i)$ corresponding to SRS transmission, or with the power determined based on the minimum value between the third power and the maximum output power $P_{CMAX}(i)$ corresponding to uplink transmission. That is, the first factor is used to perform an operation with the determined transmission power corresponding to the first SRS resource. After determining the transmission power corresponding to the first SRS resource, the first factor is used to increase this transmission power, and based on this, the transmission power of the SRS antenna port of the first SRS resource is determined, thereby improving the SRS transmission performance. In this implementation, based on the PA capability of the terminal, the SRS power can always be increased for terminals with strong PA capability, thereby improving the SRS transmission performance.

Implementation 5

In this implementation 5, the first power includes a power determined based on the minimum value between the third power and the maximum output power $P_{CMAX,f,c}(i)$ corresponding to SRS transmission; or a power determined based on the minimum value between the third power and the maximum output power $P_{CMAX}(i)$ corresponding to uplink transmission; wherein the third power is a power determined based on at least one of path loss reference signal, resource allocation, and a target power, i.e., $P_{SRS,q_s}$ determined according to Formula 2.

Taking the case where the first power includes a power determined based on the minimum value between the third power and the maximum output power $P_{CMAX}(i)$ corresponding to uplink transmission as an example, the first power $P_1$ is determined according to the following Formula 5:

$$P_1 = min \left\{ \begin{array}{c} P_{CMAX}(i) \\ \left( P_{O_{SRS,b,f,c}}(q_s) + 10 \log_{10} \left( 2^{\mu} \cdot M_{SRS,b,f,c}(i) \right) \right); \\ +\alpha_{SRS,b,f,c}(i) \cdot PL_{b,f,c}(q_s) + h_{b,f,c}(i,l) \end{array} \right\}$$

In this implementation, the transmission power of the SRS antenna port of the first SRS resource is determined based on the first factor $\alpha$ and the determined first power $P_1$; or the transmission power of the SRS antenna port of the first SRS resource on the first time-domain resource is determined based on an operation between the first factor and the first power.

In this implementation, optionally, determining the transmission power of the SRS antenna port of the first SRS resource based on the first factor $\alpha$ and the determined first power $P_1$ includes:
performing an operation between the first factor $\alpha$ and the power obtained by equally splitting the first power $P_1$ acrooss all SRS antenna ports of the first SRS resource, to determine the transmission power of each SRS antenna port of the first SRS resource.

In this implementation, optionally, determining the transmission power of the SRS antenna port of the first SRS resource on the first time-domain resource based on the operation between the first factor and the first power includes:
performing an operation between the first factor $\alpha$ and the power obtained by equally splitting the first power $P_1$ across the SRS antenna ports of the first SRS resource on the first time-domain resource, to determine the transmission power of the SRS antenna port of the first SRS resource on the first time-domain resource.

In this implementation, similar to the implementation 4, the first power is the transmission power corresponding to the first SRS resource. After determining the transmission power corresponding to the first SRS resource, the first factor is used to increase this transmission power, and based on this, the transmission power of the SRS antenna port of the first SRS resource is determined, thereby improving the SRS transmission performance. In this implementation, based on the PA capability of the terminal, the SRS power can always be increased for terminals with strong PA capability, thereby improving the SRS transmission performance.

Implementation 6

In this implementation 6, the first SRS resource is mapped to multiple groups of first time-domain resources (e.g., OFDM symbols) within a second time-domain resource (e.g., a slot), and the method includes: determining the first factor for each group of first time-domain resources respectively;
determining the transmission power of the SRS antenna port of the first SRS resource based on the first factor and the first power includes: for any group of first time-domain resources among the multiple groups of first time-domain resources, determining the transmission power corresponding to the SRS antenna port of the corresponding group of first time-domain resources based on the first factor and the first power corresponding to the corresponding group of first time-domain resources.

Optionally, for one group of first time-domain resources among the multiple groups of first time-domain resources, the transmission power corresponding to the SRS antenna port of the group of first time-domain resources is determined based on the second power corresponding to the group of first time-domain resources.

In this implementation, optionally, the first time-domain resource includes, but is not limited to, only OFDM symbols, and the second time-domain resource includes, but is not limited to, only slots.

For each group of first time-domain resources among the multiple groups of first time-domain resources, the first factor is determined respectively, and the transmission power corresponding to the SRS antenna port of the corresponding group of first time-domain resources is determined respectively based on the first factor and the first power.

Optionally, the first factors corresponding to different groups of first time-domain resources may be the same or different.

Specifically, the number of first time-domain resources (OFDM symbols) included in different groups of first time-domain resources may be the same or different. The number of SRS antenna ports in different first time-domain resources may be the same or different.

In this implementation, for one group of first time-domain resources among the multiple groups of first time-domain resources, the transmission power corresponding to the SRS antenna port of the group of first time-domain resources is determined based on the first factor and the first power corresponding to the group of first time-domain resources.

Specifically, the first factor is determined based on terminal capability, indication information sent by the base station, and first information related to the first SRS resource. For the specific method of determining the first information, refer to the detailed description above, and details will not be repeated herein.

In addition, the first power includes one or more of the following:
maximum output power corresponding to SRS transmission; maximum output power corresponding to uplink transmission; a third power; a power determined based on the minimum value between the third power and the maximum output power corresponding to SRS transmission; or a power determined based on the minimum value between the third power and the maximum output power corresponding to uplink transmission; wherein the third power is a power determined based on at least one of path loss reference signal, resource allocation, and a target power. Specifically, the first power may be determined according to the method for determining the first power in any one of the aforementioned implementations 1 to 5, and details will not be repeated herein.

For one group of first time-domain resources among the multiple groups of first time-domain resources, determining the transmission power corresponding to the SRS antenna port of the corresponding group of first time-domain resources based on the first factor and the first power corresponding to the group of first time-domain resources includes:

determining the transmission power corresponding to the first SRS resource on one group of first time-domain resources based on an operation between the first factor and the first power; determining the transmission power corresponding to the SRS antenna port of the first SRS resource in the corresponding group of first time-domain resources based on the transmission power corresponding to the first SRS resource on the one group of first time-domain resources; or,
determining the transmission power corresponding to the SRS antenna port of the first SRS resource in the corresponding group of first time-domain resources based on an operation between the first factor and the first power.

Optionally, determining the transmission power corresponding to the SRS antenna port of the first SRS resource in the corresponding group of first time-domain resources based on the transmission power corresponding to the first SRS resource on the one group of first time-domain resources includes:
equally splitting the transmission power corresponding to the first SRS resource on the one group of first time-domain resources across the SRS antenna ports of the first SRS resource in the corresponding group of first time-domain resources, and using the power allocated to each SRS antenna port as the transmission power corresponding to the SRS antenna port of the first SRS resource in the corresponding group of first time-domain resources.

Optionally, equally splitting the transmission power corresponding to the first SRS resource on any group of first time-domain resources across the SRS antenna ports of the first SRS resource in the corresponding group of first time-domain resources, and using the power allocated to each SRS antenna port as the transmission power corresponding to the SRS antenna port of the first SRS resource in the corresponding group of first time-domain resources.

In another implementation, optionally, equally splitting the power obtained by performing an operation between the first factor and the first power across the SRS antenna ports of the first SRS resource in the corresponding group of first time-domain resources, and using the power allocated to each SRS antenna port as the transmission power corresponding to the SRS antenna port of the first SRS resource in the corresponding group of first time-domain resources.

In this implementation, taking the aforementioned implementation 1 as an example, where the transmission power corresponding to the first SRS resource on one group of first time-domain resources is determined based on an operation between the first factor and the first power. For the group of first time-domain resources, there is at least one first factor (e.g., including $\alpha$ and $\beta$), and for the group of first time-domain resources, the method includes: obtaining a fourth power $P_4$ based on an operation between one first factor $\alpha$ and one first power (e.g., $P_{CMAX}(i)$); i.e., $P_4 = \alpha \cdot P_{CMAX}(i)$; obtaining a fifth power $P_5$ based on an operation between one first factor $\beta$ and another first power (e.g., the third power $P_{SRS,q_s}$); i.e., $P_5 = \beta \cdot P_{SRS,q_s}$; determining the transmission power corresponding to the first SRS resource on the one group of first time-domain resources based on the minimum value between the fourth power $P_4$ and the fifth power $P_5$.

Optionally, determining the transmission power corresponding to the first SRS resource on the one group of first time-domain resources based on the minimum value between the fourth power $P_4$ and the fifth power $P_5$ includes:
according to the above, determining the transmission power corresponding to the first SRS resource on the one group of first time-domain resources based on the minimum value between the fourth power $P_4$ and the fifth power $P_5$; determining the transmission power of the SRS antenna port of the first SRS resource in the corresponding group of first time-domain resources based on the transmission power corresponding to the first SRS resource on the one group of first time-domain resources.

In this implementation 1, the transmission power $P_{SRS,b,f,c}(i, q_s, l)$ corresponding to the first SRS resource on the one group of first time-domain resources can be expressed by the following Formula 2:

Formula 2:

$$P_{\text{SRS},b,f,c}(i, q_s, l) = \min \begin{cases} \alpha P_{\text{CMAX}}(i) \\ \beta \left( \begin{matrix} P_{\text{O}_{\text{SRS},b,f,c}}(q_s) + 10\log_{10}\left(2^{\mu} \cdot M_{\text{SRS},b,f,c}(i)\right) \\ +\alpha_{\text{SRS},b,f,c}(i) \cdot +PL_{b,f,c}(q_s) + h_{b,f,c}(i, l) \end{matrix} \right) \end{cases}$$

In this way, according to the determined $P_{(\text{SRS},b,f,c)}(i, q_s, l)$, equally split it across the SRS antenna ports of the first SRS resource in the corresponding group of first time-domain resources, and use the allocated power as the transmission power corresponding to the SRS antenna port of the first SRS resource in the corresponding group of first time-domain resources. That is, the transmission power corresponding to the SRS antenna port of the first SRS resource in the corresponding group of first time-domain resources is: $\frac{P_{\text{SRS},b,f,c}(i, q_s, l)}{N}$.

It should be noted that similarly, based on the first information, the method for determining the total transmission power of the first SRS resource based on the above implementation 2 to implementation 6 may also be used to determine the transmission power corresponding to the first SRS resource on the first time-domain resource, and details will not be repeated herein.

Implementation 7

In this implementation 7, the first SRS resource includes multiple SRS antenna port groups, and the method further includes: determining the first factor for each SRS antenna port group respectively;
determining the transmission power of the SRS antenna port of the first SRS resource based on the first factor and the first power includes: for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group.
Optionally, the first factors corresponding to different SRS antenna port groups may be the same or different.
Optionally, different SRS antenna port groups correspond to different first time-domain resources and/or different frequency-domain resources.
Optionally, the first SRS resource is transmitted on multiple OFDM symbols, and the first time-domain resource is an OFDM symbol; or the first SRS resource is transmitted on multiple OFDM symbol groups, and the first time-domain resource is an OFDM symbol group.
Optionally, the step of for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group includes: equally splitting the first power across the SRS antenna ports of the one SRS antenna port group. In this solution, the first factor may be understood as the number of SRS antenna ports included in the one SRS antenna port group.
Specifically, the first factor is determined based on terminal capability, indication information sent by the base station, and first information related to the first SRS resource. For the specific method of determining the first information, refer to the detailed description above, and details will not be repeated herein.
The first power includes one or more of the following:
a maximum output power corresponding to SRS transmission; a maximum output power corresponding to uplink transmission; a third power; a power determined based on the minimum value between the third power and the maximum output power corresponding to SRS transmission; a power determined based on the minimum value between the third power and the maximum output power corresponding to uplink transmission; wherein the third power is a power determined based on at least one of a path loss reference signal, resource allocation, and a target power.
Specifically, the first power may be determined according to the method for determining the first power in any one of the foregoing implementations 1 to 5, and details will not be repeated herein.
In this implementation, for one SRS antenna port group among the multiple SRS antenna port groups included in the first SRS resource, the transmission power corresponding to the SRS antenna port of the one SRS antenna port group is determined based on the first factor and the first power corresponding to the one SRS antenna port group.
Specifically, for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group includes:

determining the transmission power corresponding to the first SRS resource in the one SRS antenna port group based on an operation between the first factor and the first power; determining the transmission power corresponding to the SRS antenna port of the one SRS antenna port group based on the transmission power corresponding to the first SRS resource in the one SRS antenna port group; or

determining the transmission power corresponding to the SRS antenna port of the one SRS antenna port group based on an operation between the first factor and the first power.

Optionally, determining the transmission power corresponding to the SRS antenna port of the one SRS antenna port group based on the transmission power corresponding to the first SRS resource in the one SRS antenna port group includes:

equally splitting the transmission power corresponding to the first SRS resource in the one SRS antenna port group across all SRS antenna ports in the one SRS antenna port group, and using the power allocated to each SRS antenna port as the transmission power corresponding to each SRS antenna port of the one SRS antenna port group.

Optionally, determining the transmission power corresponding to the SRS antenna port of the one SRS antenna port group based on an operation between the first factor and the first power includes:

equally splitting the power obtained by performing an operation between the first factor and the first power across all SRS antenna ports in the one SRS antenna port group, and using the power allocated to each SRS antenna port as the transmission power corresponding to each SRS antenna port of the one SRS antenna port group.

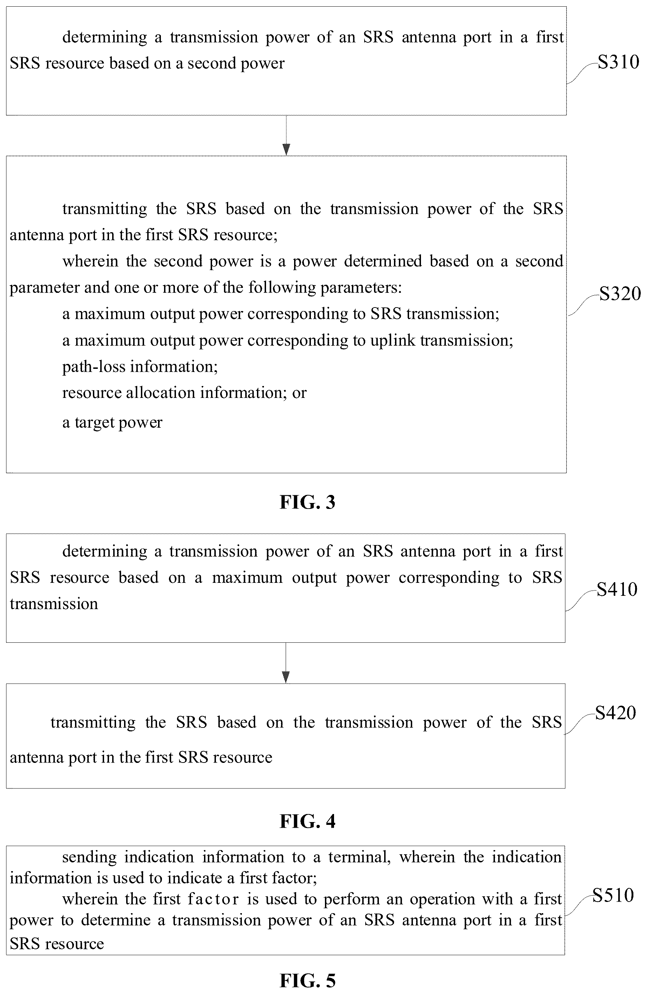

The present disclosure further provides an SRS transmission method according to an embodiment, as shown in FIG. 3, including:

S310. determine the transmission power of the SRS antenna port of the first SRS resource based on the second power;

S320. transmit the SRS based on the transmission power of the SRS antenna port of the first SRS resource; wherein the second power is a power determined based on a second parameter and one or more of the following parameters: a maximum output power corresponding to SRS transmission; a maximum output power corresponding to uplink transmission; path-loss information; resource allocation information; or a target power.

According to the SRS transmission method in the embodiment of the present disclosure, the second power used to determine the transmission power of the SRS antenna port of the first SRS resource is determined based on the second parameter. In this way, the second power is adjusted and scaled using the second parameter, so that the transmission power of the SRS antenna port of the first SRS resource is determined based on the second power, and the determined transmission power can be increased to improve the transmission performance of the SRS resource.

It should be noted that in this embodiment, determining the power based on the second parameter and one or more of the aforementioned parameters is different from the previous embodiment. It does not mean that the second parameter and the corresponding power value are operated to determine the second power, but indicates that the second parameter is involved in the calculation when determining the second power. The second parameter is added to increase the determined second power.

Optionally, the method further includes: determining the second parameter according to one or more of the following information:

terminal capability; indication information sent by a base station; first information, where the first information is related to the first SRS resource.

Optionally, the first information includes one or more of the following parameters:

the number of SRS antenna ports included in the first SRS resource; the time-division multiplexing factor of the first SRS resource; the number of first time-domain resources occupied by the first SRS resource within one second time-domain resource; the number of first time-domain resources occupied by one SRS port of the first SRS resource within one second time-domain resource; the repetition factor of the first SRS resource; the frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

In this embodiment of the present disclosure, the method for determining the second parameter is the same as the method for determining the first factor in the aforementioned embodiment, and details will not be repeated herein.

In this embodiment of the present disclosure, when the second power is determined based on one or more of the aforementioned parameters, the second power is adjusted and scaled by adding the second parameter to increase the power used to determine the transmission power of the SRS antenna port of the first SRS resource, thereby increasing the determined transmission power of the SRS antenna port of the first SRS resource.

In this embodiment of the present disclosure, optionally, the second power includes one or more of the following:

a power determined based on the second parameter and the maximum output power corresponding to SRS transmission;

a power determined based on the second parameter and the maximum output power corresponding to uplink transmission; a power determined based on the second parameter and the third power; a power determined based on the second parameter and an eighth power, where the eighth power is the minimum value between the third power and the maximum output power corresponding to SRS transmission; a power determined based on the second parameter and a ninth power, where the ninth power is the minimum value between the third power and the maximum output power corresponding to uplink transmission; wherein the third power is a power determined based on at least one of the path-loss information, the resource allocation information, and the target power.

Implementation 8

In this implementation 8, the second power $P_2$ is determined based on the second parameter $\alpha$ and the power $P_{CMAX,f,c}(i)$ (i.e., the maximum output power corresponding to SRS transmission). That is, the calculation parameters of the second power include the second parameter $\alpha$ and the power $P_{CMAX,f,c}(i)$ determined by the maximum output power corresponding to SRS transmission. The second parameter $\alpha$ is used to make the determined second power greater than the maximum output power $P_{CMAX,f,c}(i)$ corresponding to SRS transmission, thereby increasing the transmission power of the SRS antenna port of the first SRS resource.

In this implementation, in step S310, determining the transmission power of the SRS antenna port of the first SRS resource based on the second power includes:

determining the total transmission power corresponding to the first SRS resource based on the second power; determining the transmission power of the SRS antenna port of the first SRS resource based on the total transmission power corresponding to the first SRS resource.

Optionally, in one embodiment, for example, the second power $P_2$ determined based on the second parameter $\alpha$ and the maximum output power $P_{CMAX,f,c}(i)$ corresponding to SRS transmission may be: $P_{CMAX,f,c}(i) + 10 \log_{10}(\alpha)$; the total transmission power $P_{SRS,b,f,c}(i, q_s, l)$ corresponding to the first SRS resource may be expressed by the following Formula 6:

Formula 6:

$$P_{SRS,b,f,c}(i,q_s,l) = min\left\{ \begin{matrix} P_{CMAX,f,c}(i) + 10\log_{10}(\alpha) \\ \left( \begin{matrix} P_{O_{SRS,b,f,c}}(q_s) + 10\log_{10}\left(2^{\mu} \cdot M_{SRS,b,f,c}(i)\right) \\ + \alpha_{SRS,b,f,c}(i) \cdot PL_{b,f,c}(q_s) + h_{b,f,c}(i,l) \end{matrix} \right) \end{matrix} \right\};$$

that is, the total transmission power $P_{SRS,b,f,c}(i, q_s, l)$ corresponding to the first SRS resource is the minimum power between the second power $P_2$ and the third power $P_{SRS,q_s}$, where the third power $P_{SRS,q_s}$ is the power determined according to the aforementioned Formula 1.

In another implementation, optionally, in step S310, determining the transmission power of the SRS antenna port of the first SRS resource based on the second power includes:

determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Optionally, the transmission power corresponding to the first SRS resource on the first time-domain resource may also be determined according to Formula 6.

In another implementation, when the second power is a power determined based on the second parameter and the maximum output power corresponding to uplink transmission, the method and principle for determining the transmission power of the SRS antenna port of the first SRS resource based on the second power are the same as the method and principle when the second power is a power determined based on the second parameter and the maximum output power corresponding to SRS transmission, and details will not be repeated herein.

Implementation 9

In this implementation 9, the second power $P_2$ is a power determined based on the second parameter and the third power. That is, the calculation parameters of the second power $P_2$ include the second parameter $\alpha$ and the third power $P_{SRS,q_s}$, where the third power $P_{SRS,q_s}$ is the power determined according to the aforementioned Formula 1. The first information $\alpha$ is used to increase the determined third power, thereby increasing the transmission power of the SRS antenna port of the first SRS resource.

In this implementation, in step S310, determining the transmission power of the SRS antenna port of the first SRS resource based on the second power includes:

determining the total transmission power corresponding to the first SRS resource based on the second power; determining the transmission power of the SRS antenna port of the first SRS resource based on the total transmission power corresponding to the first SRS resource.

In this embodiment, for example, the second power $P_2$ determined based on the second parameter $\alpha$ and the third power $P_{SRS,q_s}$ may be:

$(P_{O_{SRS,b,f,c}}(q_s) + 10\log_{10}(2^{\mu} \cdot M_{SRS,b,f,c}(i)) + \alpha_{SRS,b,f,c}(i) \cdot PL_{b,f,c}(q_s) + h_{b,f,c}(i,l)) + 10\log_{10}(\beta)$ ; then, the total transmission power $P_{SRS,b,f,c}(i, q_s, l)$ corresponding to the first SRS resource may be expressed as:

$$P_{SRS,b,f,c}(i,q_s,l) =$$

$$min\left\{\begin{matrix} P_{CMAX,f,c}(i) \\ \left(\begin{matrix} P_{O_{SRS,b,f,c}}(q_s) + 10\log_{10}\left(2^{\mu} \cdot M_{SRS,b,f,c}(i)\right) + \\ \alpha_{SRS,b,f,c}(i) \cdot PL_{b,f,c}(q_s) + h_{b,f,c}(i,l) \end{matrix}\right) + 10\log_{10}(\beta) \end{matrix}\right. ;$$

that is, the total transmission power $P_{SRS,b,f,c}(i, q_s, l)$ corresponding to the first SRS resource is the minimum power between the second power $P_2$ and the maximum output power $P_{CMAX,f,c}(i)$ corresponding to SRS transmission.

In another implementation, optionally, in step S310, determining the transmission power of the SRS antenna port of the first SRS resource based on the second power includes:

determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Optionally, the transmission power corresponding to the first SRS resource on the first time-domain resource may also be determined according to Formula 6.

Implementation 10

In this implementation 10, the second power $P_2$ includes a power determined based on a second parameter (e.g., $\alpha$) and the maximum output power $P_{CMAX}(i)$ corresponding to uplink transmission, and a power determined based on another second parameter (e.g., $\beta$) and the third power. In this implementation, the maximum output power corresponding to uplink transmission and the third power are increased respectively, so as to increase the transmission power of the SRS antenna port of the first SRS resource.

In this implementation, in step S310, determining the transmission power of the SRS antenna port of the first SRS resource based on the second power includes:

determining the total transmission power corresponding to the first SRS resource based on a second power determined based on a second parameter (e.g., $\alpha$) and the maximum output power $P_{CMAX}(i)$ corresponding to uplink transmission) and based on another second power determined based on another second parameter (e.g., $\beta$ ) and the third power; determining the transmission power of the SRS antenna port of the first SRS resource based on the total transmission power corresponding to the first SRS resource.

For example, a second power $P_2$ determined based on a second parameter (e.g., $\alpha$ ) and the maximum output power $P_{CMAX}(i)$ corresponding to uplink transmission is: $P_{CMAX}(i) + 10\log_{10}(\alpha)$;

another second power $P_2$ determined based on another second parameter (e.g., $\beta$) and the third power is:

$(P_{O_{SRS,b,f,c}}(q_s) + 10\log_{10}(2^{\mu} \cdot M_{SRS,b,f,C}(i)) + \alpha_{SRS,b,f,c(i)} \cdot PL_{b,f,c}(q_s) + h_{v,f,c}(i,l)) + 10\log_{10}(\beta)$ ; then, the total transmission power $P_{SRS,b,f,c}(i, q_s, l)$ corresponding to the first SRS resource is determined as:

$$P_{SRS,b,f,c}(i,q_s,l) =$$

$$min\left\{\begin{matrix} P_{CMAX}(i) + 10\log_{10}(\alpha) \\ \left(\begin{matrix} P_{O_{SRS,b,f,c}}(q_s) + 10\log_{10}\left(2^{\mu} \cdot M_{SRS,b,f,c}(i)\right) \\ +\alpha_{SRS,b,f,c}(i) \cdot PL_{b,f,c}(q_s) + h_{b,f,c}(i,l) \end{matrix}\right) + 10\log_{10}(\beta) \end{matrix}\right.$$

That is, the minimum power of the two second powers is determined as the total transmission power $P_{SRS,b,f,c}(i, q_s, l)$ corresponding to the first SRS resource.

In this implementation 8, the second power $P_2$ is determined based on the second parameter $\alpha$ and the power $P_{CMAX,f,c}(i)$ (i.e., the maximum output power corresponding to SRS transmission). That is, the calculation parameters of the second power include the second parameter $\alpha$ and the power $P_{CMAX,f,c}(i)$ determined by the maximum output power corresponding to SRS transmission. The second parameter $\alpha$ is used to make the determined second power greater than the maximum output power $P_{CMAX,f,c}(i)$ corresponding to SRS transmission, thereby increasing the transmission power of the SRS antenna port of the first SRS resource.

In another implementation, optionally, in step S310, determining the transmission power of the SRS antenna port of the first SRS resource based on the second power includes:

determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Specifically, the transmission power corresponding to the first SRS resource on the first time-domain resource may also be determined in the aforementioned manner.

Implementation 11

In this implementation 11, the second power includes a power determined based on the second parameter and the eighth power; where the eighth power is the minimum value between the third power and the maximum output power corresponding to SRS transmission. In this implementation, the second power is determined by using the minimum value between the third power and the maximum output power corresponding to SRS transmission, and the second parameter. The transmission power of the SRS antenna port of the first SRS resource is determined based on the second power, so that the determined transmission power of the SRS antenna port of the first SRS resource is increased.

In the embodiments of the present disclosure, optionally, the eighth power $P_8$ may be represented by the following formula:

$$P_8 = min \left\{ \begin{array}{c} P_{CMAX,f,c}(i) \\ \left( \begin{array}{c} P_{O_{SRS},b,f,c}(q_s) + 10 \log_{10} \left( 2^\mu \cdot M_{SRS,b,f,c}(i) \right); \\ + \alpha_{SRS,b,f,c}(i) \cdot PL_{b,f,c}(q_s) + h_{b,f,c}(i,l) \end{array} \right) \end{array} \right.$$

in this case, taking the second parameter being $\alpha$ as an example, the second power $P_2$ determined based on the second parameter and the eighth power may be:

$$P_2 = 10 \log_{10}(\alpha) +$$

$$min \left\{ \begin{array}{c} P_{CMAX,f,c}(i) \\ \left( \begin{array}{c} P_{O_{SRS},b,f,c}(q_s) + 10 \log_{10} \left( 2^\mu \cdot M_{SRS,b,f,c}(i) \right); \\ + \alpha_{SRS,b,f,c}(i) \cdot PL_{b,f,c}(q_s) + h_{b,f,c}(i,l) \end{array} \right) \end{array} \right.$$

in this implementation, the transmission power of the SRS antenna port of the first SRS resource may be directly determined based on the second power $P_2$.

In another implementation, optionally, the second power $P_2$ determined in the aforementioned manner may also be used to determine the transmission power corresponding to the first SRS resource on the first time-domain resource.

It should be noted that in another implementation, the second power may be a power determined based on the second parameter and the ninth power, where the ninth power is the minimum value between the third power and the maximum output power corresponding to uplink transmission. In this implementation, when the second power is a power determined based on the second parameter and the ninth power, the method and principle for determining the second power are the same as those when the second power is a power determined based on the second parameter and the eighth power, and details will not be repeated herein.

In an embodiment of the present disclosure, optionally, the second power is a power obtained by scaling the linear value of one or more of the following using the first information or the reciprocal of the first information:

a maximum output power corresponding to SRS transmission, a maximum output power corresponding to uplink transmission, a third power, the minimum value between the third power and the maximum output power corresponding to SRS transmission, or the minimum value between the third power and the maximum output power corresponding to uplink transmission; or,

a power obtained by summing/subtracting the power value corresponding to the first information with/from the power value of one or more of the following: a maximum output power corresponding to SRS transmission, a maximum output power corresponding to uplink transmission, a third power, the minimum value between the third power and the maximum output power corresponding to SRS transmission, or the minimum value between the third power and the maximum output power corresponding to uplink transmission; or,

a power obtained by multiplying or dividing the linear value of one or more of the following by the first information: a maximum output power corresponding to SRS transmission, a maximum output power corresponding to uplink transmission, a third power, the minimum value between the third power and the maximum output power corresponding to SRS transmission, or the minimum value between the third power and the maximum output power corresponding to uplink transmission.

In an embodiment of the present disclosure, optionally, determining the transmission power of the SRS antenna port of the first SRS resource based on the second power includes:

determining the transmission power of the SRS antenna port of the first SRS resource based on the second power; or,
determining the transmission power of the SRS antenna port of the first SRS resource on the first time-domain resource based on the second power; or,
determining the total transmission power corresponding to the first SRS resource based on the second power; determining the transmission power of the SRS antenna port of the first SRS resource based on the total transmission power corresponding to the first SRS resource; or,
determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

In an embodiment of the present disclosure, optionally, determining the transmission power of the SRS antenna port of the first SRS resource based on the second power includes: determining the transmission power of the SRS antenna port of the first SRS resource based on the second power and the tenth power; the tenth power is a power determined based on one or more of the following:

a maximum output power corresponding to SRS transmission; a maximum output power corresponding to uplink transmission; path-loss information; resource allocation information; or a target power.

Optionally, when the second power is a power determined based on the second parameter $\alpha$ and the maximum output power corresponding to SRS transmission, or a power determined based on the second parameter $\alpha$ and the maximum output power corresponding to uplink transmission, the tenth power may be the aforementioned third power; when the second power is a power determined based on the second parameter and the third power, the tenth power may be the maximum output power corresponding to SRS transmission or the maximum output power corresponding to uplink transmission.

In an embodiment of the present disclosure, optionally, the first SRS resource includes multiple SRS antenna port groups, and the method further includes:

determining the second parameter for each SRS antenna port group respectively; determining the second power for each SRS antenna port group respectively;
determining the transmission power of the SRS antenna port of the first SRS resource based on the second power includes:
for one SRS antenna port group among the multiple SRS antenna port groups included in the first SRS resource, determining the transmission power corresponding to the SRS antenna port of the one SRS antenna port group based on the second power corresponding to the one SRS antenna port group.

Optionally, the first SRS resource is mapped to multiple groups of first time-domain resources within one slot, and the method includes:

determining the second parameter for each group of first time-domain resources respectively; determining the second power for each group of first time-domain resources respectively;
determining the transmission power of the SRS antenna port of the first SRS resource based on the second power includes:

for one group of first time-domain resources among the multiple groups of first time-domain resources, determining the transmission power corresponding to the SRS antenna port of the first time-domain resource of the corresponding group based on the second power corresponding to the first time-domain resource of the corresponding group.

Optionally, determining the transmission power of the SRS antenna port of the first SRS resource based on the total transmission power corresponding to the first SRS resource includes:
equally splitting the total transmission power corresponding to the first SRS resource across all SRS antenna ports in the first SRS resource, and using the power allocated to each SRS antenna port as the transmission power of each SRS antenna port of the first SRS resource.

Optionally, determining the transmission power of the SRS antenna port of the first SRS resource on the first time-domain resource based on the transmission power corresponding to the first SRS resource on the first time-domain resource includes:
equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

To clearly illustrate the technical solutions of the present disclosure, the following examples are further described.

For a UE capable of transmitting at $P_{CMAX}(i)$ (i.e., the maximum transmit power specified in the current specification) for each OFDM symbol, the linear value $\widehat{P_{SRS}}$ of the transmit power $P_{SRS,b,f,c}(i, q_s, l)$ may be equally split across the SRS antenna ports mapped to one OFDM symbol.

Many UEs cannot transmit at $P_{CMAX}(i)$ for each OFDM symbol. For these UEs, power control enhancement for SRS based on the TDM-ed scheme may also be considered. It may be considered that the transmit power of the SRS antenna ports of the same SRS resource on the same OFDM symbol should be the same. For one SRS resource, one of the following principles regarding power control of TDM-based 8-port SRS resources with a TDM factor s may be considered:

Alt 1: the linear value $\widehat{P_{SRS}}$ of the transmit power $P_{SRS}$ is equally split across all antenna ports of the SRS resource;

Alt 2: the linear value $\widehat{P_{SRS}}(l)$ of the transmit power $P_{SRS}(l)$ is equally split across the SRS antenna ports mapped to one OFDM symbol, where $l$ is the index of the OFDM symbol.

For Alt 1, all SRS antenna ports have the same transmit power. For Alt 2, all SRS antenna ports mapped to the same OFDM symbol have the same transmit power, and the SRS ports mapped to different OFDM symbols may have the same or different transmit powers.

For $P_{SRS}$ in Alt 1, several options may be considered:

Option 1:

$$P_{SRS} = min \begin{cases} P_{CMAX,SRS}(i) \\ \left( \begin{matrix} P_{O_{SRS,b,f,c}}(q_s) + 10\log_{10}\left(2^{\mu} \cdot M_{SRS,b,f,c}(i)\right) \\ + \alpha_{SRS,b,f,c}(i) \cdot PL_{b,f,c}(q_s) + h_{b,f,c}(i,l) \end{matrix} \right) \end{cases} ;$$

where
$P_{CMAX,SRS}(i)$ is the maximum transmit power of the SRS.

Option 2:

$$P_{SRS} = min \begin{cases} P_{CMAX}(i) + 10\log_{10}(\alpha) \\ P_{O_{SRS,b,f,c}}(q_s) + \\ 10\log_{10}\left(2^{\mu} \cdot M_{SRS,b,f,c}(i)\right) + \alpha_{SRS,b,f,c}(i) \cdot PL_{b,f,c}(q_s) + h_{b,f,c}(i,l) \end{cases} ;$$

where $P_{CMAX}(i)$ is the maximum transmit power specified in the current specification, and $\alpha$ is a scaling factor depending on the PA combination of the UE. $\alpha$ may be determined by the PA with the lowest maximum output power.

For example, if s = 2 and the PA of the UE is 20+20+20+20+17+17+17+17 dBm, $\alpha$ may be 2. If s = 2 and the PA of the UE is 20+20+20+20+14+14+14+14 dBm, $\alpha$ = 1. Specifically, for $\alpha$ = 1, $P_{SRS}$ is equal to $P_{SRS,b,f,c}(i, q_s, l)$ specified in the current specification.

Option 3:

$$P_{SRS} = min\left\{ \begin{array}{c} P_{CMAX,SRS}(i) \\ \left( \begin{array}{c} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{array} \right) + 10\log_{10}(\beta) \end{array} \right.;$$

where $P_{CMAX,SRS}(i)$ is the maximum transmit power of the SRS, and optionally, $\beta$ = s (where s is the TDM factor of the SRS resource).

Option 4:

$$P_{SRS} = min\left\{ \begin{array}{c} P_{CMAX}(i) + 10\log_{10}(\alpha) \\ \left( \begin{array}{c} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{array} \right) + 10\log_{10}(\beta) \end{array} \right.;$$

where

$P_{CMAX}(i)$ is the maximum transmit power specified in the current specification, $\alpha$ is a scaling factor depending on the PA combination of the UE, and optionally, $\beta$ = s, where s is the TDM factor of the SRS resource.

Option 5:

$$P_{SRS} = 10\log_{10}(\alpha) + min\left\{ \begin{array}{c} P_{CMAX}(i) \\ \left( \begin{array}{c} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{array} \right) \end{array} \right.;$$

where $\alpha$ is a scaling factor depending on the PA combination of the UE.

For Option 1, by specifying a new maximum transmit power for the SRS that is greater than $P_{CMAX}(i)$ (i.e., the maximum transmit power specified in the current specification), the transmit power of the SRS can be increased when the total transmit power of the 8 SRS antenna ports is greater than $P_{CMAX}(i)$. This can then improve the coverage and transmission reliability of the SRS.

For Option 2, by specifying a factor $\alpha$ > 1, the transmit power of the SRS can also be increased when the total transmit power of the 8 SRS antenna ports is greater than $P_{CMAX}(i)$. The difference between Option 1 and Option 2 lies in whether a new definition of the maximum transmit power of the SRS is introduced, or the maximum transmit power of the SRS is introduced by scaling the linear value of the maximum transmit power in the current specification by $\alpha$.

For Option 3, in addition to improving the SRS coverage and transmission reliability when the total transmit power of the 8 SRS antenna ports is greater than $P_{CMAX}(i)$, the overall transmit power of the 8 RS antenna ports does not exceed $P_{CMAX,SRS}(i)$.

For Option 4, similar to Option 3, the transmit power of the SRS can be increased when the total transmit power of the 8 SRS antenna ports is greater than $P_{CMAX}(i)$ or not greater than $P_{CMAX}(i)$. The difference between Option 3 and Option 4 lies in whether a new definition of the maximum transmit power of the SRS is introduced, or the maximum transmit power consumption of the SRS is introduced by scaling the linear value of the maximum transmit power in the current specification by $\alpha$.

For Option 5, the power boost value of the SRS antenna port is constant.

For $P_{SRS}(l)$ in Alt 2, the following two determination alternatives may be considered:

Alt 1: $P_{SRS}(l)$ is determined based on $P_{SRS,b,f,c}(i, q_s, l)$ by multiplexing a symbol-specific scaling factor $\alpha(l)$ to the linear value of the transmit power $P_{SRS,b,f,c}(i, q_s, l)$ specified in the current specification. That is, the scaling factor for symbol $l$ is $\alpha(l)$, and the scaling factors for different OFDM symbols may be the same or different;

Alt 2: $P_{SRS}(l)$ is determined according to the power control parameters of the SRS resource set, and one of the following options is adopted:

Manner 1:

$$P_{SRS}(l) = min \begin{cases} P_{CMAX,SRS}(i,l) \\ P_{O_{SRS,b,f,c}}(q_s) + 10\log_{10}\left(2^\mu \cdot M_{SRS,b,f,c}(i)\right); \\ +\alpha_{SRS,b,f,c}(i) \cdot PL_{b,f,c}(q_s) + h_{b,f,c}(i,l) \end{cases}$$

where $P_{CMAX,SRS}(i,l)$ is the new maximum transmit power of the SRS for OFDM symbol $l$.

Manner 2:

$$P_{SRS}(l) = min \begin{cases} P_{CMAX}(i) + 10\log_{10}\left(\alpha(l)\right) \\ P_{O_{SRS,b,f,c}}(q_s) + 10\log_{10}\left(2^\mu \cdot M_{SRS,b,f,c}(i)\right); \\ +\alpha_{SRS,b,f,c}(i) \cdot PL_{b,f,c}(q_s) + h_{b,f,c}(i,l) \end{cases}$$

where $P_{CMAX}(i)$ is the maximum transmit power specified in the current specification, and $\alpha(l)$ is a scaling factor depending on the PA combination of the UE for OFDM symbol $l$. $\alpha(l)$ may be determined based on the PA with the lowest maximum output power in the OFDM symbol.

Manner 3:

$$P_{SRS}(l) = min \begin{cases} P_{CMAX,SRS}(i,l) \\ \left( \begin{matrix} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{matrix} \right) + 10\log_{10}(\beta) \end{cases} ;$$

where $P_{CMAX,SRS}(i,l)$ is the new maximum transmit power of the SRS for OFDM symbol $l$, and optionally, $\beta = s$ (where $s$ is the TDM factor of the SRS resource).

Manner 4:

$$P_{SRS}(l) = min \begin{cases} P_{CMAX}(i) + 10\log_{10}\left(\alpha(l)\right) \\ \left( \begin{matrix} P_{O_{SRS,b,f,c}}(q_s) + 10\log_{10}\left(2^\mu \cdot M_{SRS,b,f,c}(i)\right) \\ +\alpha_{SRS,b,f,c}(i) \cdot PL_{b,f,c}(q_s) + h_{b,f,c}(i,l) \end{matrix} \right) + 10\log_{10}(\beta) \end{cases} ;$$

where $P_{CMAX}(i)$ is the maximum transmit power specified in the current specification, $\alpha(l)$ is a scaling factor depending on the PA combination of the UE for OFDM symbol $l$, and optionally, $\beta = s$ (where s is the TDM factor of the SRS resource).

Manner 5:

$$P_{SRS}(l) = 10\log_{10}\left(\alpha(l)\right) +$$

$$minin \begin{cases} P_{CMAX}(i) \\ \left( \begin{matrix} P_{O_{SRS,b,f,c}}(q_s) + 10\log_{10}\left(2^\mu \cdot M_{SRS,b,f,c}(i)\right) + \\ \alpha_{SRS,b,f,c}(i) \cdot PL_{b,f,c}(q_s) + h_{b,f,c}(i,l) \end{matrix} \right); \end{cases}$$

where $\alpha(l)$ is a scaling factor depending on the PA combination of the UE for OFDM symbol $l$.

Recommending 6:1 for 8-port SRS resources in SRS resource sets using codebook or antenna switching and resource mapping based on a time-division multiplexing factor s, the linear value $\widehat{P_{SRS}}$ of the transmit power $P_{CMAX}(i)$ is equally split across SRS antenna ports for $P_{SRS,b,f,c}(i, q_s, l)$ mapped to one OFDM symbol, at least for UEs capable of transmitting (i.e., the maximum transmit power specified in the current specification) for each OFDM symbol.

In another embodiment of the present disclosure, optionally, as shown in FIG. 4, the SRS transmission method includes:

S401. determine the transmission power of the SRS antenna port of the first SRS resource based on the maximum output power corresponding to SRS transmission;

S402. transmit the SRS based on the transmission power of the SRS antenna port of the first SRS resource.

Optionally, in the transmission method, determining the transmission power of the SRS antenna port of the first SRS resource based on the maximum output power corresponding to SRS transmission includes: determining the total transmission power corresponding to the first SRS resource based on the maximum output power corresponding to SRS transmission; determining the transmission power of the SRS antenna port of the first SRS resource based on the total transmission power corresponding to the first SRS resource.

Optionally, in the transmission method, determining the total transmission power corresponding to the first SRS resource based on the maximum output power corresponding to SRS transmission includes: determining that the total transmission power corresponding to the first SRS resource is equal to the minimum power between the maximum output power corresponding to SRS transmission and the third power; wherein the third power is a power determined based on at least one of the path-loss information, the resource allocation information, and the target power.

In an embodiment of the present disclosure, as shown in FIG. 5, an information indication method for a Sounding Reference Signal (SRS) is further provided, including:

S510. send indication information to a terminal, where the indication information is used to indicate a first factor; wherein the first factor is used to perform an operation with a first power to determine the transmission power of an SRS antenna port of the first SRS resource; the first power is a power determined based on one or more of the following parameters: maximum output power corresponding to SRS transmission; maximum output power corresponding to uplink transmission; path-loss information; resource allocation information; or a target power.

Optionally, the method in this embodiment of the present disclosure is applied to a network-side device, i.e., a base station.

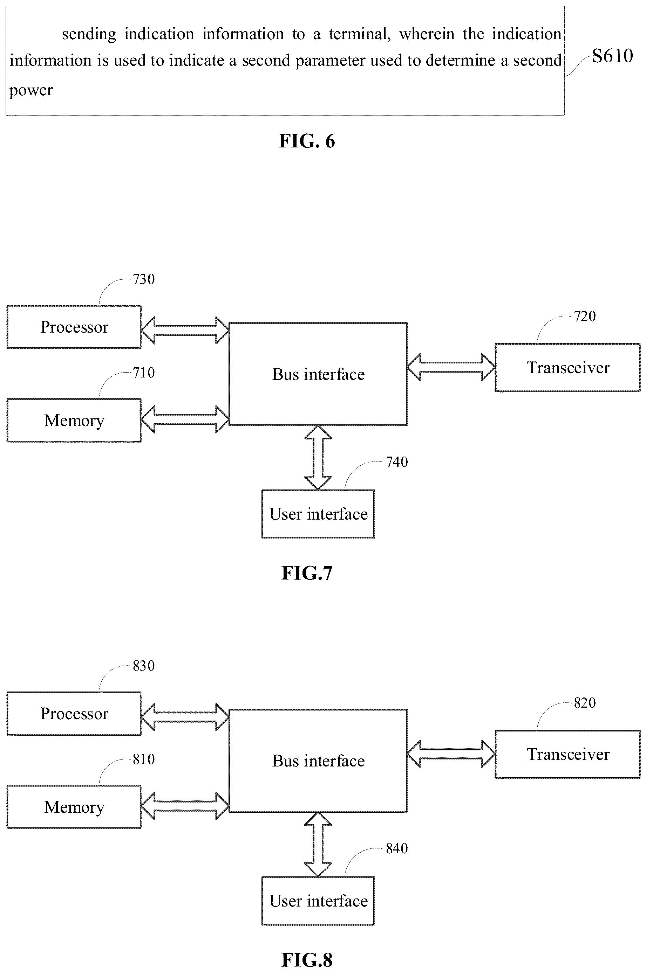

An embodiment of the present disclosure further provides an information indication method for a Sounding Reference Signal (SRS), as shown in FIG. 6, including:

S610. send indication information to a terminal, where the indication information indicates a second parameter used to determine a second power; wherein the second power is a power determined based on the second parameter and one or more of the following parameters:

maximum output power corresponding to SRS transmission; maximum output power corresponding to uplink transmission; path-loss information; resource allocation information; a target power.

Optionally, the method in this embodiment of the present disclosure is applied to a network-side device, i.e., a base station.

An embodiment of the present disclosure further provides a terminal, as shown in FIG. 7, including a memory 710, a transceiver 720, and a processor 730:

the memory 710 is configured to store a computer program; the transceiver 720 is configured to send and receive data under the control of the processor; the processor 730 is configured to read the computer program in the memory and perform the following operations:

determining the transmission power of an SRS antenna port of the first SRS resource based on a first factor and a first power; transmitting the SRS based on the transmission power of the SRS antenna port of the first SRS resource; wherein the first power is a power determined based on one or more of the following parameters:

maximum output power corresponding to SRS transmission; maximum output power corresponding to uplink transmission; path-loss information; resource allocation information; or a target power.

Optionally, in the terminal, the first power includes one or more of the following:

maximum output power corresponding to SRS transmission; maximum output power corresponding to uplink transmission; a third power; a power determined based on the minimum value between the third power and the maximum output power corresponding to SRS transmission; or a power determined based on the minimum value between the third power and the maximum output power corresponding to uplink transmission; wherein the third power is a power determined based on at least one of the path-loss information, the resource allocation information, and the target power.

Optionally, in the terminal, the operation of the processor 730 determining the transmission power of the SRS antenna port of the first SRS resource based on the first factor and the first power includes:

determining the total transmission power corresponding to the first SRS resource by performing an operation on the first factor and the first power; determining the transmission power of the SRS antenna port of the first SRS resource based on the total transmission power corresponding to the first SRS resource; or,

determining the transmission power of the SRS antenna port of the first SRS resource by performing an operation on the first factor and the first power; or,

determining the transmission power corresponding to the first SRS resource on a first time-domain resource by performing an operation on the first factor and the first power; determining the transmission power of the SRS antenna port of the first SRS resource on the first time-domain resource based on the transmission power corresponding to the first SRS resource on the first time-domain resource; or,

determining the transmission power of the SRS antenna port of the first SRS resource on the first time-domain resource by performing an operation on the first factor and the first power.

Optionally, in the terminal, the operation of the processor 730 performing an operation on the first factor and the first power includes performing an operation on the first factor and the first power in one of the following manners: scaling the linear value of the first power using the first factor; scaling the linear value of the first power using the reciprocal of the first factor; summing the power value corresponding to the first factor and the power value of the first power; subtracting the power value corresponding to the first factor from the power value of the first power; multiplying the first factor by the linear value of the first power; or dividing the linear value of the first power by the first factor.

Optionally, in the terminal, there is at least one first factor; there is at least one first power, and when there are at least two first powers, the at least two first powers are determined in different manners; the operation of the processor 730 determining the transmission power of the SRS antenna port of the first SRS resource based on the first factor and the first power includes:

obtaining a fourth power based on an operation of one first factor and one first power; obtaining a fifth power based on an operation of one first factor and another first power; determining the transmission power of the SRS antenna port of the first SRS resource based on the minimum value between the fourth power and the fifth power.

Optionally, in the terminal, the operation of the processor 730 determining the transmission power of the SRS antenna port of the first SRS resource based on the first factor and the first power includes:

determining a sixth power based on an operation of the first factor and the first power; determining the total transmission power of the SRS antenna port of the first SRS resource based on the sixth power and a seventh power; wherein the first power includes one of the maximum output power corresponding to SRS transmission, the maximum output power corresponding to uplink transmission, and the third power; the seventh power is a power determined based on one or more of the following items that are not used to determine the first power:

maximum output power corresponding to SRS transmission; maximum output power corresponding to uplink transmission; path-loss information; resource allocation information; a target power.

Optionally, in the terminal, the first SRS resource includes multiple SRS antenna port groups, and the processor 730 is further configured to:

determine the first factor for each SRS antenna port group respectively; the operation of determining the transmission power of the SRS antenna port of the first SRS resource based on the first factor and the first power includes:

for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group.

Optionally, in the terminal, the first SRS resource is mapped to multiple groups of first time-domain resources within one slot, and the processor 730 is configured to: determine the first factor for each group of first time-domain resources respectively;

the operation of determining the transmission power of the SRS antenna port of the first SRS resource based on the first factor and the first power includes:

for any group of first time-domain resources among the multiple groups of first time-domain resources, determining the transmission power corresponding to the SRS antenna port of the corresponding group of first time-domain resources based on the first factor and the first power corresponding to the corresponding group of first time-domain resources.

Optionally, in the terminal, the operation of the processor 730 determining the transmission power of the SRS antenna port of the first SRS resource based on the total transmission power corresponding to the first SRS resource includes:

equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the terminal, the operation of the processor 730 determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Optionally, the processor 730 is further configured to: determine the first factor according to one or more of the following information:

terminal capability; indication information sent by a base station; or first information, where the first information is related to the first SRS resource.

Optionally, in the terminal, the first information includes one or more of the following parameters:

the number of SRS antenna ports included in the first SRS resource; the time-division multiplexing factor of the first SRS resource; the number of first time-domain resources occupied by the first SRS resource within one second time-domain resource; the number of first time-domain resources occupied by one SRS port of the first SRS resource within one second time-domain resource; the repetition factor of the first SRS resource; the frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

In FIG. 7, the bus architecture may include any number of interconnected buses and bridges. Specifically, one or more processors represented by the processor 730 and various circuits of the memory represented by the memory 710 are linked together. The bus architecture may also link various other circuits such as peripheral devices, voltage regulators, and power management circuits, which are well-known in the art and will not be further described herein. The bus interface provides an interface. The transceiver 720 may be multiple components, i.e., including a transmitter and a receiver, and provides a unit for communicating with various other devices over a transmission medium (the transmission medium includes wireless channels, wired channels, optical cables, etc.). For different user devices, the user interface 740 may also be an interface capable of connecting to external or internal required devices, and the connected devices include but are not limited to a keypad, a display, a speaker, a microphone, a joystick, etc.

The processor 730 is responsible for managing the bus architecture and general processing, and the memory 710 may store data used by the processor 730 when performing operations.

Optionally, the processor 730 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory and is configured to execute any one of the methods provided in the embodiments of the present disclosure according to the obtained executable instructions. The processor and the memory may also be arranged physically separately.

An embodiment of the present disclosure further provides a terminal, as shown in FIG. 8, including a memory 810, a transceiver 820, and a processor 830; the memory 810 is configured to store a computer program; the transceiver 820 is configured to send and receive data under the control of the processor; the processor 830 is configured to read the computer program in the memory and perform the following operations:

determining the transmission power of an SRS antenna port of the first SRS resource based on a second power; transmitting the SRS based on the transmission power of the SRS antenna port of the first SRS resource; wherein the second power is a power determined based on a second parameter and one or more of the following parameters:

maximum output power corresponding to SRS transmission; maximum output power corresponding to uplink transmission; path-loss information; resource allocation information; or a target power.

Optionally, the second power includes one or more of the following:

a power determined based on the second parameter and the maximum output power corresponding to SRS transmission; a power determined based on the second parameter and the maximum output power corresponding to uplink transmission; a power determined based on the second parameter and the third power; a power determined based on the second parameter and an eighth power, where the eighth power is the minimum value between the third power and the maximum output power corresponding to SRS transmission; a power determined based on the second parameter and a ninth power, where the ninth power is the minimum value between the third power and the maximum output power corresponding to uplink transmission; wherein the third power is a power determined based on at least one of the path-loss information, the resource allocation information, and the target power.

Optionally, in the terminal, the operation of the processor 830 determining the transmission power of the SRS antenna port of the first SRS resource based on the second power includes:

determining the transmission power of the SRS antenna port of the first SRS resource based on the second power; or, determining the transmission power of the SRS antenna port of the first SRS resource on the first time-domain resource based on the second power; or, determining the total transmission power corresponding to the first SRS resource based on the second power; determining the transmission power of the SRS antenna port of the first SRS resource based on the total transmission power corresponding to the first SRS resource; or, determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Optionally, in the terminal, the operation of determining the transmission power of the SRS antenna port of the first SRS resource based on the second power includes: determining the transmission power of the SRS antenna port of the first SRS resource based on the second power and a tenth power; wherein the tenth power is a power determined based on one or more of the following:

maximum output power corresponding to SRS transmission; maximum output power corresponding to uplink transmission; path-loss information; resource allocation information; or a target power.

Optionally, in the terminal, the first SRS resource includes multiple SRS antenna port groups, and the processor 830 is further configured to: determine the second parameter for each SRS antenna port group respectively; determine the second power for each SRS antenna port group respectively; the operation of the processor 830 determining the transmission power of the SRS antenna port of the first SRS resource based on the second power includes:

for one SRS antenna port group among the multiple SRS antenna port groups included in the first SRS resource, determining the transmission power corresponding to the SRS antenna port of the one SRS antenna port group based on the second power corresponding to the one SRS antenna port group.

Optionally, in the terminal, the first SRS resource is mapped to multiple groups of first time-domain resources within one slot, and the processor 830 is configured to: determine the second parameter for each group of first time-domain resources respectively; determine the second power for each group of first time-domain resources respectively;

the operation of the processor 830 determining the transmission power of the SRS antenna port of the first SRS resource based on the second power includes:

for any group of first time-domain resources among the multiple groups of first time-domain resources, determining the transmission power corresponding to the SRS antenna port of the first time-domain resource of the corresponding group based on the second power corresponding to the first time-domain resource of the corresponding group.

Optionally, in the terminal, the operation of the processor 830 determining the transmission power of the SRS antenna port of the first SRS resource based on the total transmission power corresponding to the first SRS resource includes:

equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the terminal, the operation of the processor 830 determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Optionally, the processor 830 is further configured to: determine the second parameter according to one or more of the following information:

terminal capability; indication information sent by a base station; first information, where the first information is related to the first SRS resource.

Optionally, the first information includes one or more of the following parameters:

the number of SRS antenna ports included in the first SRS resource; the time-division multiplexing factor of the first SRS resource; the number of first time-domain resources occupied by the first SRS resource within one second time-domain resource; the number of first time-domain resources occupied by one SRS port of the first SRS resource within one second time-domain resource; the repetition factor of the first SRS resource; the frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

In FIG. 8, the bus architecture may include any number of interconnected buses and bridges. Specifically, one or more processors represented by the processor 830 and various circuits of the memory represented by the memory 810 are linked together. The bus architecture may also link various other circuits such as peripheral devices, voltage regulators, and power management circuits, which are well-known in the art and will not be further described herein. The bus interface provides an interface. The transceiver 820 may be multiple components, i.e., including a transmitter and a receiver, and provides a unit for communicating with various other devices over a transmission medium, the transmission medium includes wireless channels, wired channels, optical cables, etc.. For different user devices, the user interface 840 may also be an interface capable of connecting to external or internal required devices, and the connected devices include but are not limited to a keypad, a display, a speaker, a microphone, a joystick, etc.

The processor 830 is responsible for managing the bus architecture and general processing, and the memory 810 may store data used by the processor 830 when performing operations.

Optionally, the processor 830 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory and is configured to execute any one of the methods provided in the embodiments of the present disclosure according to the obtained executable instructions. The processor and the memory may also be arranged physically separately.

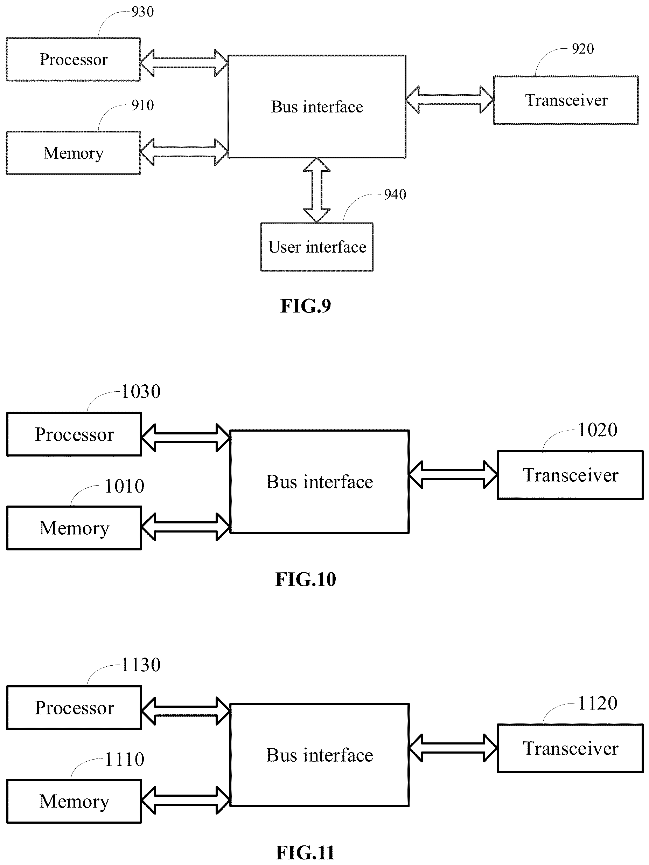

An embodiment of the present disclosure further provides a terminal, as shown in FIG. 9, including a memory 910, a transceiver 920, and a processor 930;

the memory 910 is configured to store a computer program; the transceiver 920 is configured to send and receive data under the control of the processor; the processor 930 is configured to read the computer program in the memory and perform the following operations:

determining the transmission power of the SRS antenna port of the first SRS resource based on the maximum output power corresponding to SRS transmission; transmitting the SRS based on the transmission power of the SRS antenna port of the first SRS resource.

Optionally, in the terminal, the operation of the processor 930 determining the transmission power of the SRS antenna port of the first SRS resource based on the maximum output power corresponding to SRS transmission includes: determining the total transmission power corresponding to the first SRS resource based on the maximum output power corresponding to SRS transmission; determining the transmission power of the SRS antenna port of the first SRS resource based on the total transmission power corresponding to the first SRS resource.

Optionally, in the terminal, the operation of the processor 930 determining the total transmission power corresponding to the first SRS resource based on the maximum output power corresponding to SRS transmission includes:

determining that the total transmission power corresponding to the first SRS resource is equal to the minimum power between the maximum output power corresponding to SRS transmission and the third power; wherein the third power is a power determined based on at least one of the path-loss information, the resource allocation information, and the target power.

An embodiment of the present disclosure further provides a network device, including a memory 1010, a transceiver 1020, and a processor 1030;

the memory 1010 is configured to store a computer program; the transceiver 1020 is configured to send and receive data under the control of the processor; the processor 1030 is configured to read the computer program in the memory and perform the following operations:

sending indication information to a terminal, where the indication information is used to indicate a first factor; wherein the first factor is used to perform an operation with a first power to determine the transmission power of an SRS antenna port of the first SRS resource; the first power is a power determined based on one or more of the following parameters:

maximum output power corresponding to SRS transmission; maximum output power corresponding to uplink transmission; path-loss information; resource allocation information; or a target power.

In FIG. 10, the bus architecture may include any number of interconnected buses and bridges. Specifically, various circuits of one or more processors represented by the processor 1030 and the memory represented by the memory 1010 are linked together. The bus architecture may also link various other circuits such as peripheral devices, voltage regulators, and power management circuits, which are well-known in the art and will not be further described herein. The bus interface provides an interface. The transceiver 1020 may be multiple components, i.e., including a transmitter and a receiver, and provides a unit for communicating with various other devices over a transmission medium, the transmission medium includes wireless channels, wired channels, optical cables, etc.. The processor 1030 is responsible for managing the bus architecture and general processing, and the memory 1010 may store data used by the processor 1030 when performing operations.

The processor 1030 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

An embodiment of the present disclosure further provides a network device, as shown in FIG. 11, including a memory 1110, a transceiver 1120, and a processor 1130;

the memory 1110 is configured to store a computer program; the transceiver 1120 is configured to send and receive data under the control of the processor 1130; the processor 1130 is configured to read the computer program in the memory and perform the following operations: sending indication information to a terminal, where the indication information indicates a second parameter used to determine a second power; wherein the second power is a power determined based on the second parameter and one or more of the following parameters:

maximum output power corresponding to SRS transmission; maximum output power corresponding to uplink transmission; path-loss information; resource allocation information; a target power.

In FIG. 11, the bus architecture may include any number of interconnected buses and bridges. Specifically, various circuits of one or more processors 1130 represented by the processor and the memory 1110 represented by the memory are linked together. The bus architecture may also link various other circuits such as peripheral devices, voltage regulators, and power management circuits, which are well-known in the art and will not be further described herein. The bus interface provides an interface. The transceiver 1120 may be multiple components, i.e., including a transmitter and a receiver, and provides a unit for communicating with various other devices over a transmission medium, the transmission medium includes wireless channels, wired channels, optical cables, etc.. The processor 1130 is responsible for managing the bus architecture and general processing, and the memory 1110 may store data used by the processor 1130 when performing operations.

The processor 1130 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

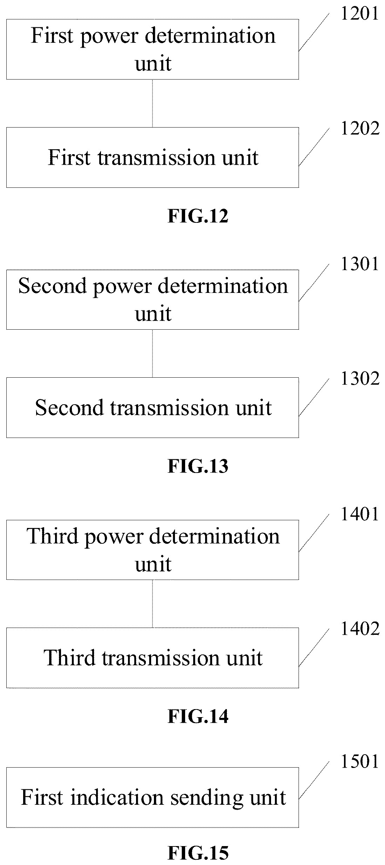

An embodiment of the present disclosure further provides an apparatus for transmitting a Sounding Reference Signal (SRS), as shown in FIG. 12, including:

a first power determination unit 1201, configured to determine the transmission power of an SRS antenna port of the first SRS resource based on a first factor and a first power; a first transmission unit 1202, configured to transmit the SRS based on the transmission power of the SRS antenna port of the first SRS resource; wherein the first power is a power determined based on one or more of the following parameters:

maximum output power corresponding to SRS transmission; maximum output power corresponding to uplink transmission; path-loss information; resource allocation information; or a target power.

Optionally, in the SRS transmission apparatus, the first power includes one or more of the following:

maximum output power corresponding to SRS transmission; maximum output power corresponding to uplink transmission; a third power; a power determined based on the minimum value between the third power and the maximum output power corresponding to SRS transmission; or a power determined based on the minimum value between the third power and the maximum output power corresponding to uplink transmission; wherein the third power is a power determined based on at least one of the path-loss information, the resource allocation information, and the target power.

Optionally, in the SRS transmission apparatus, the operation of the first power determination unit determining the transmission power of the SRS antenna port of the first SRS resource based on the first factor and the first power includes:

determining the total transmission power corresponding to the first SRS resource by performing an operation on the first factor and the first power; determining the transmission power of the SRS antenna port of the first SRS resource based on the total transmission power corresponding to the first SRS resource; or,
determining the transmission power of the SRS antenna port of the first SRS resource by performing an operation on the first factor and the first power; or,
determining the transmission power corresponding to the first SRS resource on a first time-domain resource by performing an operation on the first factor and the first power; determining the transmission power of the SRS antenna port of the first SRS resource on the first time-domain resource based on the transmission power corresponding to the first SRS resource on the first time-domain resource; or,
determining the transmission power of the SRS antenna port of the first SRS resource on the first time-domain resource by performing an operation on the first factor and the first power.

Optionally, in the SRS transmission apparatus, the operation of the first power determination unit 1201 performing an operation on the first factor and the first power includes performing an operation on the first factor and the first power in one of the following manners:

scaling the linear value of the first power using the first factor; scaling the linear value of the first power using the reciprocal of the first factor; summing the power value corresponding to the first factor and the power value of the first power; subtracting the power value corresponding to the first factor from the power value of the first power; multiplying the first factor by the linear value of the first power; or dividing the linear value of the first power by the first factor.

Optionally, in the SRS transmission apparatus, there is at least one first factor; there is at least one first power, and when there are at least two first powers, the at least two first powers are determined in different manners; the operation of the first power determination unit 1201 determining the transmission power of the SRS antenna port of the first SRS resource based on the first factor and the first power includes:

obtaining a fourth power based on an operation of one first factor and one first power; obtaining a fifth power based on an operation of one first factor and another first power; determining the transmission power of the SRS antenna port of the first SRS resource based on the minimum value between the fourth power and the fifth power.

Optionally, in the SRS transmission apparatus, the operation of the first power determination unit 1201 determining the transmission power of the SRS antenna port of the first SRS resource based on the first factor and the first power includes:

determining a sixth power based on an operation of the first factor and the first power; determining the total transmission power of the SRS antenna port of the first SRS resource based on the sixth power and a seventh power; wherein the first power includes one of the maximum output power corresponding to SRS transmission, the maximum output power corresponding to uplink transmission, and the third power;

the seventh power is a power determined based on one or more of the following items that are not used to determine the first power: maximum output power corresponding to SRS transmission; maximum output power corresponding to uplink transmission; path-loss information; resource allocation information; a target power.

Optionally, in the SRS transmission apparatus, the first SRS resource includes multiple SRS antenna port groups, and the first power determination unit 1201 is further configured to: determine the first factor for each SRS antenna port group respectively;

the operation of the first power determination unit 1201 determining the transmission power of the SRS antenna port of the first SRS resource based on the first factor and the first power includes:

for one SRS antenna port group among the multiple SRS antenna port groups included in the first SRS resource, determining the transmission power corresponding to the SRS antenna port of the one SRS antenna port group based on the first factor and the first power corresponding to the one SRS antenna port group.

Optionally, in the SRS transmission apparatus, the first SRS resource is mapped to multiple groups of first time-domain resources within one slot, and the first power determination unit 1201 is further configured to: determine the first factor for each group of first time-domain resources respectively;

the operation of the first power determination unit 1201 determining the transmission power of the SRS antenna port of the first SRS resource based on the first factor and the first power includes:

for any group of first time-domain resources among the multiple groups of first time-domain resources, determining the transmission power corresponding to the SRS antenna port of the corresponding group of first time-domain resources based on the first factor and the first power corresponding to the corresponding group of first time-domain resources.

Optionally, in the SRS transmission apparatus, the operation of the first power determination unit 1201 determining the transmission power of the SRS antenna port of the first SRS resource based on the total transmission power corresponding to the first SRS resource includes:

equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the SRS transmission apparatus, the operation of the first power determination unit 1201 determining the transmission power of the SRS antenna port of the first SRS resource on the first time-domain resource based on the transmission power corresponding to the first SRS resource on the first time-domain resource includes:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Optionally, in the SRS transmission apparatus, the first power determination unit 1201 is further configured to: determine the first factor according to one or more of the following information:

terminal capability; indication information sent by a base station; or first information, where the first information is related to the first SRS resource.

Optionally, in the SRS transmission apparatus, the first information includes one or more of the following parameters:

the number of SRS antenna ports included in the first SRS resource; the time-division multiplexing factor of the first SRS resource; the number of first time-domain resources occupied by the first SRS resource within one second time-domain resource; the number of first time-domain resources occupied by one SRS port of the first SRS resource within one second time-domain resource; the repetition factor of the first SRS resource; the frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

An embodiment of the present disclosure further provides an apparatus for transmitting a Sounding Reference Signal (SRS), as shown in FIG. 13, including:

a second power determination unit 1301, configured to determine the transmission power of an SRS antenna port of the first SRS resource based on a second power; a second transmission unit 1302, configured to transmit the SRS based on the transmission power of the SRS antenna port of the first SRS resource; wherein the second power is a power determined based on a second parameter and one or more of the following parameters:

maximum output power corresponding to SRS transmission; maximum output power corresponding to uplink transmission; path-loss information; resource allocation information; or a target power.

Optionally, in the SRS transmission apparatus, the second power includes one or more of the following: a power determined based on the second parameter and the maximum output power corresponding to SRS transmission; a power determined based on the second parameter and the maximum output power corresponding to uplink transmission; a power determined based on the second parameter and the third power; a power determined based on the second parameter and an eighth power, where the eighth power is the minimum value between the third power and the maximum output power corresponding to SRS transmission; a power determined based on the second parameter and a ninth power, where the ninth power is the minimum value between the third power and the maximum output power corresponding to uplink transmission; wherein the third power is a power determined based on at least one of the path-loss information, the resource allocation information, and the target power.

Optionally, in the SRS transmission apparatus, the operation of determining the transmission power of the SRS antenna port of the first SRS resource based on the second power includes:

determining the transmission power of the SRS antenna port of the first SRS resource based on the second power; or,
determining the transmission power of the SRS antenna port of the first SRS resource on the first time-domain resource based on the second power; or,
determining the total transmission power corresponding to the first SRS resource based on the second power; determining the transmission power of the SRS antenna port of the first SRS resource based on the total transmission power corresponding to the first SRS resource; or,
determining the transmission power corresponding to the first SRS resource on the first time-domain resource based on the second power; determining the transmission power of the SRS antenna port of the first SRS resource on the first time-domain resource based on the transmission power corresponding to the first SRS resource on the first time-domain resource.

Optionally, in the SRS transmission apparatus, the operation of the second power determination unit 1301 determining the transmission power of the SRS antenna port of the first SRS resource based on the second power includes: determining the transmission power of the SRS antenna port of the first SRS resource based on the second power and a tenth power; wherein the tenth power is a power determined based on one or more of the following: maximum output power corresponding to SRS transmission; maximum output power corresponding to uplink transmission; path-loss information; resource allocation information; or a target power.

Optionally, in the SRS transmission apparatus, the first SRS resource includes multiple SRS antenna port groups, and the second power determination unit 1301 is further configured to: determine the second parameter for each SRS antenna port group respectively; determine the second power for each SRS antenna port group respectively; the operation of the second power determination unit 1301 determining the transmission power of the SRS antenna port of the first SRS resource based on the second power includes:
for one SRS antenna port group among the multiple SRS antenna port groups included in the first SRS resource, determining the transmission power corresponding to the SRS antenna port of the one SRS antenna port group based on the second power corresponding to the one SRS antenna port group.

Optionally, in the SRS transmission apparatus, the first SRS resource is mapped to multiple groups of first time-domain resources within one slot, and the second power determination unit 1301 is further configured to: determine the second parameter for each group of first time-domain resources respectively; determine the second power for each group of first time-domain resources respectively;
the operation of the second power determination unit 1301 determining the transmission power of the SRS antenna port of the first SRS resource based on the second power includes:
for any group of first time-domain resources among the multiple groups of first time-domain resources, determining the transmission power corresponding to the SRS antenna port of the first time-domain resource of the corresponding group based on the second power corresponding to the first time-domain resource of the corresponding group.

Optionally, in the SRS transmission apparatus, the operation of the second power determination unit 1301 determining the transmission power of the SRS antenna port of the first SRS resource based on the total transmission power corresponding to the first SRS resource includes:
equally splitting the total transmission power corresponding to the first SRS resource across all SRS antenna ports in the first SRS resource, and using the power allocated to each SRS antenna port as the transmission power of each SRS antenna port of the first SRS resource.

Optionally, in the SRS transmission apparatus, the operation of the second power determination unit 1301 determining the transmission power of the SRS antenna port of the first SRS resource on the first time-domain resource based on the transmission power corresponding to the first SRS resource on the first time-domain resource includes:
equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

Optionally, in the SRS transmission apparatus, the second power determination unit 1301 is further configured to: determine the second parameter according to one or more of the following information:

terminal capability; indication information sent by a base station; first information, where the first information is related to the first SRS resource.

Optionally, in the SRS transmission apparatus, the first information includes one or more of the following parameters:

the number of SRS antenna ports included in the first SRS resource; the time-division multiplexing factor of the first SRS resource; the number of first time-domain resources occupied by the first SRS resource within one second time-domain resource; the number of first time-domain resources occupied by one SRS port of the first SRS resource within one second time-domain resource; the repetition factor of the first SRS resource; the frequency hopping factor of the first SRS resource; the number of SRS antenna ports in the first SRS resource included in one first time-domain resource; the number of repetitions of the first SRS resource within one slot; the number of groups into which the antenna ports of the first SRS resource are divided in the time domain; the number of SRS antenna port groups included in the first SRS resource; or the number of first time-domain resource groups mapped by the first SRS resource within one slot.

An embodiment of the present disclosure further provides an apparatus for transmitting a Sounding Reference Signal (SRS), as shown in FIG. 14, including:

a third power determination unit 1401, configured to determine the transmission power of the SRS antenna port of the first SRS resource based on the maximum output power corresponding to SRS transmission; a third transmission unit 1402, configured to transmit the SRS based on the transmission power of the SRS antenna port of the first SRS resource.

Optionally, in the transmission apparatus, the operation of the third power determination unit 1401 determining the transmission power of the SRS antenna port of the first SRS resource based on the maximum output power corresponding to SRS transmission includes:

determining the total transmission power corresponding to the first SRS resource based on the maximum output power corresponding to SRS transmission; determining the transmission power of the SRS antenna port of the first SRS resource based on the total transmission power corresponding to the first SRS resource.

Optionally, in the transmission apparatus, the operation of the third power determination unit 1401 determining the total transmission power corresponding to the first SRS resource based on the maximum output power corresponding to SRS transmission includes:

determining that the total transmission power corresponding to the first SRS resource is equal to the minimum power between the maximum output power corresponding to SRS transmission and the third power; wherein the third power is a power determined based on at least one of the path-loss information, the resource allocation information, and the target power.

An embodiment of the present disclosure further provides an information indication apparatus for a Sounding Reference Signal (SRS), as shown in FIG. 15, including: a first indication sending unit 1501, configured to send indication information to a terminal, where the indication information is used to indicate a first factor; wherein the first factor is used to perform an operation with a first power to determine the transmission power of an SRS antenna port of the first SRS resource; the first power is a power determined based on one or more of the following parameters:

maximum output power corresponding to SRS transmission; maximum output power corresponding to uplink transmission; path-loss information; resource allocation information; or a target power.

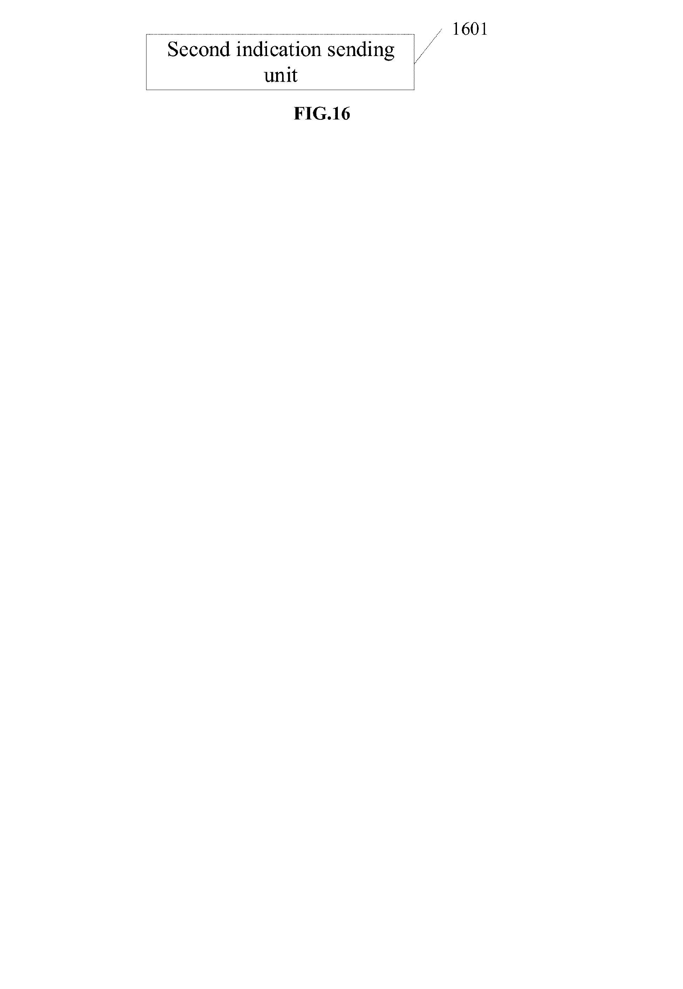

An embodiment of the present disclosure further provides an information indication apparatus for a Sounding Reference Signal (SRS), as shown in FIG. 16, including: a second indication sending unit 1601, configured to send indication information to a terminal, where the indication information indicates a second parameter used to determine a second power; wherein the second power is a power determined based on the second parameter and one or more of the following parameters:

maximum output power corresponding to SRS transmission; maximum output power corresponding to uplink transmission; path-loss information; resource allocation information; a target power.

It should be noted that the apparatus provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a processor-readable storage medium, where the processor-readable storage medium stores a computer program, and the computer program is configured to cause the processor to execute any one of the above transmission methods or any one of the above information indication methods.

The processor-readable storage medium may be any available medium or data storage device accessible to a processor, including but not limited to magnetic storage (e.g., floppy disks, hard disks, magnetic tapes, magneto-optical disks (MO), etc.), optical storage (e.g., Compact Disks (CD), Digital Versatile Disks (DVD), Blu-ray Disks (BD), High-Definition Versatile Disks (HVD), etc.), and semiconductor storage (e.g., Read-Only Memory (ROM), Erasable Programmable Read-Only Memory (EPROM), Electrically Erasable Programmable Read-Only Memory (EEPROM), NAND Flash memory, Solid State Disks (SSD), etc.).

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage and optical storage) containing computer-usable program code.

The present disclosure is described with reference to flowcharts and/or block diagrams of methods, devices (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, a special-purpose computer, an embedded processor, or other programmable data processing devices to generate a machine, such that the instructions executed by the processor of the computer or other programmable data processing devices generate an apparatus for implementing the functions specified in one or more flows in the flowcharts and/or one or more blocks in the block diagrams.

These processor-executable instructions may also be stored in a processor-readable memory that can guide a computer or other programmable data processing devices to work in a specific manner, such that the instructions stored in the processor-readable memory generate an article of manufacture including an instruction apparatus, which implements the functions specified in one or more flows in the flowcharts and/or one or more blocks in the block diagrams.

These processor-executable instructions may also be loaded onto a computer or other programmable data processing apparatus to cause a series of operational steps to be performed on the computer or other programmable apparatus to produce a computer-implemented process, such that the instructions executed on the computer or other programmable apparatus provide steps for implementing the functions specified in one or more flows in the flowcharts and/or one or more blocks in the block diagrams.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

**Claims**

1. A method for transmitting a Sounding Reference Signal (SRS), comprising:

   determining a transmission power of an SRS antenna port of a first SRS resource based on a first factor and a first power;
   transmitting the SRS based on the transmission power of the SRS antenna port of the first SRS resource;
   wherein the first power is a power determined based on one or more of the following parameters:

   a maximum output power corresponding to SRS transmission;
   a maximum output power corresponding to uplink transmission;
   path-loss information;
   resource allocation information; or
   a target power.

2. The SRS transmission method according to claim 1, wherein the first power comprises one or more of the following:

   the maximum output power corresponding to the SRS transmission;
   the maximum output power corresponding to the uplink transmission;
   a third power;
   a power determined based on a minimum value between the third power and the maximum output power corresponding to the SRS transmission; or
   a power determined based on a minimum value between the third power and the maximum output power corresponding to the uplink transmission;
   wherein the third power is a power determined based on at least one of the path-loss information, the resource allocation information, and the target power.

3. The SRS transmission method according to claim 1 or 2, wherein determining the transmission power of the SRS antenna port of the first SRS resource based on the first factor and the first power comprises:

determining a total transmission power corresponding to the first SRS resource based on the first factor and the first power; determining a transmission power of the SRS antenna port of the first SRS resource based on the total transmission power corresponding to the first SRS resource;
or,
determining a transmission power of the SRS antenna port of the first SRS resource by performing an operation on the first factor and the first power;
or,
determining a transmission power corresponding to the first SRS resource on a first time-domain resource based on the first factor and the first power; determining a transmission power of the SRS antenna port of the first SRS resource on the first time-domain resource based on the transmission power corresponding to the first SRS resource on the first time-domain resource;
or,
determining a transmission power of the SRS antenna port of the first SRS resource on the first time-domain resource based on the first factor and the first power.

4. The SRS transmission method according to claim 3, wherein, determining the total transmission power corresponding to the first SRS resource based on the first factor and the first power comprises: determining the total transmission power corresponding to the first SRS resource by performing an operation on the first factor and the first power; and/or,

determining the transmission power corresponding to the first SRS resource on the first time-domain resource based on the first factor and the first power comprises: determining the transmission power corresponding to the first SRS resource on the first time-domain resource by performing an operation on the first factor and the first power; and/or,
determining the transmission power of the SRS antenna port of the first SRS resource on the first time-domain resource based on the first factor and the first power comprises: determining the transmission power of the SRS antenna port of the first SRS resource on the first time-domain resource by performing an operation on the first factor and the first power.

5. The method according to claim 3, wherein the first SRS resource is transmitted on a plurality of first time-domain resources, and determining the transmission power of the SRS antenna port of the first SRS resource on the first time-domain resource based on the first factor and the first power comprises:
for a given time-domain resource among the plurality of first time-domain resources, equally splitting the first power across SRS antenna ports on the given first time-domain resource, wherein the first factor is determined based on first information, and the first information is the number of SRS antenna ports in the first SRS resource included in the given first time-domain resource.

6. The method according to any one of claims 3 to 5, **characterized in that**, the first SRS resource is transmitted on a plurality of OFDM symbols, and the first time-domain resource is an OFDM symbol; or
the first SRS resource is transmitted on a plurality of OFDM symbol groups, and the first time-domain resource is an OFDM symbol group.

7. The SRS transmission method according to any one of claims 3 to 6, wherein performing the operation on the first factor and the first power comprises performing the operation on the first factor and the first power in one of the following manners:

scaling a linear value of the first power using the first factor;
scaling a linear value of the first power using the inverse of the first factor;
summing a power value corresponding to the first factor and a power value of the first power;
subtracting a power value corresponding to the first factor from a power value of the first power;
multiplying the first factor by a linear value of the first power; or
dividing a linear value of the first power by the first factor.

8. The SRS transmission method according to any one of claims 1 to 7, wherein there is at least one first factor; there is at least one first power, and when there are at least two first powers, the at least two first powers are determined in different manners;

determining the transmission power of the SRS antenna port of the first SRS resource based on the first factor and the first power comprises:

obtaining a fourth power based on an operation of one first factor and one first power;
obtaining a fifth power based on an operation of one first factor and another first power;
determining the transmission power of the SRS antenna port of the first SRS resource based on a minimum value between the fourth power and the fifth power.

9. The SRS transmission method according to any one of claims 1 to 7, wherein determining the transmission power of the SRS antenna port of the first SRS resource based on the first factor and the first power comprises:

determining a sixth power based on the first factor and the first power;
determining a total transmission power of the SRS antenna port of the first SRS resource based on the sixth power and a seventh power;
wherein the first power includes one of a maximum output power corresponding to SRS transmission, a maximum output power corresponding to uplink transmission, and a third power;
the seventh power is a power determined based on one or more of the following that are not used to determine the first power:

the maximum output power corresponding to the SRS transmission;
the maximum output power corresponding to the uplink transmission;
the path-loss information;
the resource allocation information;
the target power.

10. The SRS transmission method according to claim 9, wherein determining the sixth power based on the first factor and the first power comprises:
determining the sixth power by performing an operation on the first factor and the first power.

11. The SRS transmission method according to claim 3, wherein, determining the total transmission power corresponding to the first SRS resource based on the first factor and the first power comprises: determining the total transmission power corresponding to the first SRS resource by performing an operation on the first factor and the first power; and/or, determining the transmission power corresponding to the first SRS resource on the first time-domain resource based on the first factor and the first power comprises: determining the transmission power corresponding to the first SRS resource on the first time-domain resource by performing an operation on the first factor and the first power.

12. The SRS transmission method according to any one of claims 1 to 11, wherein the first SRS resource includes a plurality of SRS antenna port groups, and the method further comprises: determining the first factor for each SRS antenna port group;
determining the transmission power of the SRS antenna port of the first SRS resource based on the first factor and the first power comprises:
for one SRS antenna port group among a plurality of SRS antenna port groups included in the first SRS resource, determining the transmission power corresponding to the SRS antenna port of the one SRS antenna port group based on the first factor and the first power corresponding to the one SRS antenna port group.

13. The SRS transmission method according to any one of claims 1 to 11, wherein the first SRS resource is mapped to multiple groups of first time-domain resources within one slot, and the method comprises: determining the first factor for each group of first time-domain resources respectively;
determining the transmission power of the SRS antenna port of the first SRS resource based on the first factor and the first power comprises:
for any group of first time-domain resources among the multiple groups of first time-domain resources, determining the transmission power of the SRS antenna port of the corresponding group of first time-domain resources based on the first factor and the first power corresponding to the corresponding group of first time-domain resources.

14. The SRS transmission method according to claim 3, wherein determining the transmission power of the SRS antenna port of the first SRS resource based on the total transmission power corresponding to the first SRS resource comprises:
equally splitting the total transmission power corresponding to the first SRS resource across all SRS antenna ports in the first SRS resource, and using the power allocated to each SRS antenna port as the transmission power of each SRS antenna port of the first SRS resource.

15. The transmission method according to claim 3, wherein determining the transmission power of the SRS antenna port of the first SRS resource on the first time-domain resource based on the transmission power corresponding to the first SRS resource on the first time-domain resource comprises:
equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

16. The SRS transmission method according to any one of claims 1 to 15, further comprising determining the first factor according to one or more of the following information:

   terminal capability;
   indication information sent by a base station; or
   first information, wherein the first information is related to the first SRS resource.

17. The SRS transmission method according to claim 16, wherein the first information comprises one or more of the following parameters:

   the number of SRS antenna ports included in the first SRS resource;
   a time-division multiplexing factor of the first SRS resource;
   the number of first time-domain resources occupied by the first SRS resource within one second time-domain resource;
   the number of first time-domain resources occupied by one SRS port of the first SRS resource within one second time-domain resource;
   a repetition factor of the first SRS resource;
   a frequency hopping factor of the first SRS resource;
   the number of SRS antenna ports in the first SRS resource included in one first time-domain resource;
   the number of repetitions of the first SRS resource within one slot;
   the number of groups into which the antenna ports of the first SRS resource are divided in a time domain;
   the number of SRS antenna port groups included in the first SRS resource; or
   the number of first time-domain resource groups mapped by the first SRS resource within one slot.

18. A method for transmitting a Sounding Reference Signal (SRS), comprising:

   determining a transmission power of an SRS antenna port of a first SRS resource based on a second power;
   transmitting the SRS based on the transmission power of the SRS antenna port of the first SRS resource;
   wherein the second power is a power determined based on a second parameter and one or more of the following parameters:

      a maximum output power corresponding to SRS transmission;
      a maximum output power corresponding to uplink transmission;
      path-loss information;
      resource allocation information; or
      a target power.

19. The SRS transmission method according to claim 18, wherein the second power comprises one or more of the following:

      a power determined based on the second parameter and the maximum output power corresponding to the SRS transmission;
      a power determined based on the second parameter and the maximum output power corresponding to the uplink transmission;
      a power determined based on the second parameter and a third power;
      a power determined based on the second parameter and an eighth power, wherein the eighth power is a minimum value between the third power and the maximum output power corresponding to the SRS transmission;

a power determined based on the second parameter and a ninth power, wherein the ninth power is a minimum value between the third power and the maximum output power corresponding to the uplink transmission; wherein the third power is a power determined based on at least one of the path-loss information, the resource allocation information, and the target power.

20. The SRS transmission method according to claim 18 or 19, wherein determining the transmission power of the SRS antenna port of the first SRS resource based on the second power comprises:

determining the transmission power of the SRS antenna port of the first SRS resource based on the second power;
or,
determining the transmission power of the SRS antenna port of the first SRS resource on the first time-domain resource based on the second power;
or,
determining the total transmission power corresponding to the first SRS resource based on the second power; determining the transmission power of the SRS antenna port of the first SRS resource based on the total transmission power corresponding to the first SRS resource;
or,
determining the transmission power of the first SRS resource on the first time-domain resource based on the second power; determining the transmission power of the SRS antenna port of the first SRS resource on the first time-domain resource based on the transmission power corresponding to the first SRS resource on the first time-domain resource.

21. The SRS transmission method according to claim 20, wherein determining the transmission power of the SRS antenna port of the first SRS resource based on the second power comprises:

determining the transmission power of the SRS antenna port of the first SRS resource based on the second power and a tenth power;
the tenth power is a power determined based on one or more of the following:

the maximum output power corresponding to the SRS transmission;
the maximum output power corresponding to the uplink transmission;
the path-loss information;
the resource allocation information; or
the target power.

22. The SRS transmission method according to claim 20, wherein the first SRS resource includes a plurality of SRS antenna port groups, and the method further comprises:

determining the second parameter for each SRS antenna port group respectively;
determining the second power for each SRS antenna port group respectively;
determining the transmission power of the SRS antenna port of the first SRS resource based on the second power comprises:
for one SRS antenna port group among the plurality of SRS antenna port groups included in the first SRS resource, determining the transmission power corresponding to the SRS antenna port of the one SRS antenna port group based on the second power corresponding to the one SRS antenna port group.

23. The SRS transmission method according to claim 20, wherein the first SRS resource is mapped to multiple groups of first time-domain resources within one slot, and the method comprises: determining the second parameter for each group of first time-domain resources respectively; determining the second power for each group of first time-domain resources respectively;
determining the transmission power of the SRS antenna port of the first SRS resource based on the second power comprises:
for one group of first time-domain resources among the multiple groups of first time-domain resources, determining the transmission power corresponding to the SRS antenna port of the one group of first time-domain resources based on the second power corresponding to the one group of first time-domain resources.

24. The SRS transmission method according to claim 20, wherein determining the transmission power of the SRS antenna port of the first SRS resource based on the total transmission power corresponding to the first SRS resource comprises:

equally splitting the total transmission power corresponding to the first SRS resource across all SRS antenna ports in the first SRS resource, and using the power allocated to each SRS antenna port as the transmission power of each SRS antenna port of the first SRS resource.

25. The SRS transmission method according to claim 20, wherein determining the transmission power of the SRS antenna port of the first SRS resource on the first time-domain resource based on the transmission power corresponding to the first SRS resource on the first time-domain resource comprises:

equally splitting the transmission power corresponding to the first SRS resource on the first time-domain resource across the SRS antenna ports of the first SRS resource on the first time-domain resource, and using the power allocated to each SRS antenna port as the transmission power of each SRS antenna port of the first SRS resource on the first time-domain resource.

26. The SRS transmission method according to any one of claims 18 to 25, further comprising:
determining the second parameter according to one or more of the following information:

   terminal capability;
   indication information sent by a base station;
   first information, wherein the first information is related to the first SRS resource.

27. The SRS transmission method according to claim 26, wherein the first information comprises one or more of the following parameters:

   the number of SRS antenna ports included in the first SRS resource;
   a time-division multiplexing factor of the first SRS resource;
   the number of first time-domain resources occupied by the first SRS resource within one second time-domain resource;
   the number of first time-domain resources occupied by one SRS port of the first SRS resource within one second time-domain resource;
   a repetition factor of the first SRS resource;
   a frequency hopping factor of the first SRS resource;
   the number of SRS antenna ports in the first SRS resource included in one first time-domain resource;
   the number of repetitions of the first SRS resource within one slot;
   the number of groups into which the antenna ports of the first SRS resource are divided in the time domain;
   the number of SRS antenna port groups included in the first SRS resource; or
   the number of first time-domain resource groups mapped by the first SRS resource within one slot.

28. A method for transmitting a Sounding Reference Signal (SRS), comprising:

   determining a transmission power of an SRS antenna port of a first SRS resource based on a maximum output power corresponding to SRS transmission;
   transmitting the SRS based on the transmission power of the SRS antenna port of the first SRS resource.

29. The transmission method according to claim 28, wherein determining the transmission power of the SRS antenna port of the first SRS resource based on the maximum output power corresponding to the SRS transmission comprises:

   determining a total transmission power corresponding to the first SRS resource based on the maximum output power corresponding to the SRS transmission;
   determining the transmission power of the SRS antenna port of the first SRS resource based on the total transmission power corresponding to the first SRS resource.

30. The transmission method according to claim 29, wherein determining the total transmission power corresponding to the first SRS resource based on a maximum output power corresponding to SRS transmission comprises:

   determining that the total transmission power corresponding to the first SRS resource is equal to a minimum power between the maximum output power corresponding to the SRS transmission and a third power;
   wherein the third power is a power determined based on at least one of the path-loss information, the resource allocation information, and the target power.

31. An information indication method for a Sounding Reference Signal (SRS), comprising:

sending indication information to a terminal, wherein the indication information is used to indicate a first factor; wherein the first factor is used to perform an operation with a first power to determine a transmission power of an SRS antenna port of a first SRS resource; the first power is a power determined based on one or more of the following parameters:

a maximum output power corresponding to SRS transmission;
a maximum output power corresponding to uplink transmission;
path-loss information;
resource allocation information; or
a target power.

32. An information indication method for a Sounding Reference Signal (SRS), comprising:

sending indication information to a terminal, wherein the indication information is used to indicate a second parameter used to determine a second power; wherein the second power is a power determined based on the second parameter and one or more of the following parameters:

a maximum output power corresponding to SRS transmission;
a maximum output power corresponding to uplink transmission;
path-loss information;
resource allocation information;
a target power.

33. A terminal, comprising:

a memory, a transceiver, and a processor, wherein the memory is configured to store a computer program; the transceiver is configured to send and receive data under control of the processor; the processor is configured to read the computer program in the memory and perform the following operations:

determining a transmission power of an SRS antenna port of a first SRS resource based on a first factor and a first power; transmitting the SRS based on the transmission power of the SRS antenna port of the first SRS resource; wherein the first power is a power determined based on one or more of the following parameters:

a maximum output power corresponding to SRS transmission;
a maximum output power corresponding to uplink transmission;
path-loss information;
resource allocation information; or
a target power.

34. The terminal according to claim 33, wherein the first power comprises one or more of the following:

the maximum output power corresponding to the SRS transmission;
the maximum output power corresponding to the uplink transmission;
a third power;
a power determined based on a minimum value between the third power and the maximum output power corresponding to the SRS transmission; or
a power determined based on a minimum value between the third power and the maximum output power corresponding to the uplink transmission;
wherein the third power is a power determined based on at least one of the path-loss information, the resource allocation information, and the target power.

35. The terminal according to claim 33 or 34, wherein determining the transmission power of the SRS antenna port of the first SRS resource based on the first factor and the first power performed by the processor comprises:

determining a total transmission power corresponding to the first SRS resource based on the first factor and the first power; determining the transmission power of the SRS antenna port of the first SRS resource based on the total transmission power corresponding to the first SRS resource;
or,
determining the transmission power of the SRS antenna port of the first SRS resource by performing an operation on the first factor and the first power;
or,
determining a transmission power corresponding to the first SRS resource on a first time-domain resource based on the first factor and the first power; determining the transmission power of the SRS antenna port of the first SRS resource on the first time-domain resource based on the transmission power corresponding to the first SRS resource on the first time-domain resource;
or,
determining the transmission power of the SRS antenna port of the first SRS resource on the first time-domain resource based on the first factor and the first power.

36. A terminal, comprising:

a memory, a transceiver, and a processor,
wherein the memory is configured to store a computer program; the transceiver is configured to send and receive data under control of the processor; the processor is configured to read the computer program in the memory and perform the following operations:

determining a transmission power of an SRS antenna port of a first SRS resource based on a second power; transmitting the SRS based on the transmission power of the SRS antenna port of the first SRS resource; wherein the second power is a power determined based on a second parameter and one or more of the following parameters:

a maximum output power corresponding to SRS transmission;
a maximum output power corresponding to uplink transmission;
path-loss information;
resource allocation information; or
a target power.

37. The terminal according to claim 36, wherein the second power comprises one or more of the following:

a power determined based on the second parameter and the maximum output power corresponding to SRS transmission;
a power determined based on the second parameter and the maximum output power corresponding to uplink transmission;
a power determined based on the second parameter and a third power;
a power determined based on the second parameter and an eighth power, wherein the eighth power is a minimum value between the third power and the maximum output power corresponding to SRS transmission;
a power determined based on the second parameter and a ninth power, wherein the ninth power is a minimum value between the third power and the maximum output power corresponding to uplink transmission;
wherein the third power is a power determined based on at least one of the path-loss information, the resource allocation information, and the target power.

38. A terminal, comprising:

a memory, a transceiver, and a processor,
wherein the memory is configured to store a computer program; the transceiver is configured to send and receive data under control of the processor; the processor is configured to read the computer program in the memory and perform the following operations:

determining a transmission power of an SRS antenna port of a first SRS resource based on a maximum output power corresponding to SRS transmission;
transmitting the SRS based on the transmission power of the SRS antenna port of the first SRS resource.

39. A network device, comprising:

a memory, a transceiver, and a processor,
wherein the memory is configured to store a computer program; the transceiver is configured to send and receive data under control of the processor; the processor is configured to read the computer program in the memory and perform the following operations:

sending indication information to a terminal, wherein the indication information is used to indicate a first factor;
wherein the first factor is used to perform an operation with a first power to determine a transmission power of an SRS antenna port of a first SRS resource;
the first power is a power determined based on one or more of the following parameters:

a maximum output power corresponding to SRS transmission;
a maximum output power corresponding to uplink transmission;
path-loss information;
resource allocation information; or
a target power.

40. A network device, comprising:

a memory, a transceiver, and a processor,
wherein the memory is configured to store a computer program; the transceiver is configured to send and receive data under control of the processor; the processor is configured to read the computer program in the memory and perform the following operations:

sending indication information to a terminal, wherein the indication information is used to indicate a second parameter used to determine a second power;
wherein the second power is a power determined based on the second parameter and one or more of the following parameters:

a maximum output power corresponding to SRS transmission;
a maximum output power corresponding to uplink transmission;
path-loss information;
resource allocation information;
a target power.

41. A transmission apparatus for a Sounding Reference Signal (SRS), comprising:

a first power determination unit, configured to determine a transmission power of an SRS antenna port of a first SRS resource based on a first factor and a first power;
a first transmission unit, configured to transmit the SRS based on the transmission power of the SRS antenna port of the first SRS resource;
wherein the first power is a power determined based on one or more of the following parameters:

a maximum output power corresponding to SRS transmission;
a maximum output power corresponding to uplink transmission;
path-loss information;
resource allocation information; or
a target power.

42. The transmission apparatus according to claim 41, wherein the first power comprises one or more of the following:

a maximum output power corresponding to SRS transmission;
a maximum output power corresponding to uplink transmission;

a third power;

a power determined based on a minimum value between the third power and the maximum output power corresponding to SRS transmission; or

a power determined based on a minimum value between the third power and the maximum output power corresponding to uplink transmission;

wherein the third power is a power determined based on at least one of the path-loss information, the resource allocation information, and the target power.

43. The transmission apparatus according to any one of claims 41 or 42, wherein determining the transmission power of the SRS antenna port of the first SRS resource based on the first factor and the first power performed by the first power determination unit comprises:

determining a total transmission power corresponding to the first SRS resource based on the first factor and the first power; determining the transmission power of the SRS antenna port of the first SRS resource based on the total transmission power corresponding to the first SRS resource;

or,

determining the transmission power of the SRS antenna port of the first SRS resource by performing an operation on the first factor and the first power;

or,

determining the transmission power corresponding to the first SRS resource on a first time-domain resource based on the first factor and the first power; determining the transmission power of the SRS antenna port of the first SRS resource on the first time-domain resource based on the transmission power corresponding to the first SRS resource on the first time-domain resource;

or,

determining the transmission power of the SRS antenna port of the first SRS resource on the first time-domain resource based on the first factor and the first power.

44. A transmission apparatus for a Sounding Reference Signal (SRS), comprising:

a second power determination unit, configured to determine a transmission power of an SRS antenna port of a first SRS resource based on a second power;

a second transmission unit, configured to transmit the SRS based on the transmission power of the SRS antenna port of the first SRS resource;

wherein the second power is a power determined based on a second parameter and one or more of the following parameters:

a maximum output power corresponding to SRS transmission;

a maximum output power corresponding to uplink transmission;

path-loss information;

resource allocation information; or

a target power.

45. The transmission apparatus according to claim 44, wherein the second power comprises one or more of the following:

a power determined based on the second parameter and the maximum output power corresponding to SRS transmission;

a power determined based on the second parameter and the maximum output power corresponding to uplink transmission;

a power determined based on the second parameter and a third power;

a power determined based on the second parameter and an eighth power, wherein the eighth power is a minimum value between the third power and the maximum output power corresponding to SRS transmission;

a power determined based on the second parameter and a ninth power, wherein the ninth power is a minimum value between the third power and the maximum output power corresponding to uplink transmission;

wherein the third power is a power determined based on at least one of the path-loss information, the resource allocation information, and the target power.

46. A transmission apparatus for a Sounding Reference Signal (SRS), comprising:

a third power determination unit, configured to determine a transmission power of an SRS antenna port of a first SRS resource based on a maximum output power corresponding to SRS transmission;

a third transmission unit, configured to transmit the SRS based on the transmission power of the SRS antenna port of the first SRS resource.

47. An information indication apparatus for a Sounding Reference Signal (SRS), comprising:

a first indication sending unit, configured to send indication information to a terminal, wherein the indication information is used to indicate a first factor;

wherein the first factor is used to perform an operation with a first power to determine a transmission power of an SRS antenna port of a first SRS resource;

the first power is a power determined based on one or more of the following parameters:

a maximum output power corresponding to SRS transmission;
a maximum output power corresponding to uplink transmission;
path-loss information;
resource allocation information; or
a target power.

48. An information indication apparatus for a Sounding Reference Signal (SRS), comprising:

a second indication sending unit, configured to send indication information to a terminal, wherein the indication information is used to indicate a second parameter used to determine a second power;

wherein the second power is a power determined based on the second parameter and one or more of the following parameters:

a maximum output power corresponding to SRS transmission;
a maximum output power corresponding to uplink transmission;
path-loss information;
resource allocation information;
a target power.

49. A processor-readable storage medium, wherein the processor-readable storage medium stores a computer program, and the computer program is configured to cause a processor to execute the transmission method according to any one of claims 1 to 30, or to cause a processor to execute the information indication method according to claim 31 or 32.

Network
device

Terminal
device

Terminal
device

**FIG. 1**

determining a transmission power of an SRS antenna port in a first
SRS resource based on a first factor and a first power

S210

transmitting the SRS based on the transmission power of the SRS
antenna port in the first SRS resource;

wherein the first power is a power determined based on one or more of
the following parameters:

a maximum output power corresponding to SRS transmission;

a maximum output power corresponding to uplink transmission;

path-loss information;

resource allocation information; or

a target power

S220

**FIG. 2**

determining a transmission power of an SRS antenna port in a first SRS resource based on a second power

S310

transmitting the SRS based on the transmission power of the SRS antenna port in the first SRS resource;

wherein the second power is a power determined based on a second parameter and one or more of the following parameters:

a maximum output power corresponding to SRS transmission;

a maximum output power corresponding to uplink transmission;

path-loss information;

resource allocation information; or

a target power

S320

**FIG. 3**

determining a transmission power of an SRS antenna port in a first SRS resource based on a maximum output power corresponding to SRS transmission

S410

transmitting the SRS based on the transmission power of the SRS antenna port in the first SRS resource

S420

**FIG. 4**

sending indication information to a terminal, wherein the indication information is used to indicate a first factor;

wherein the first factor is used to perform an operation with a first power to determine a transmission power of an SRS antenna port in a first SRS resource

S510

**FIG. 5**

sending indication information to a terminal, wherein the indication information is used to indicate a second parameter used to determine a second power

S610

**FIG. 6**

730
Processor

710
Memory

Bus interface

720
Transceiver

740
User interface

**FIG.7**

830
Processor

810
Memory

Bus interface

820
Transceiver

840
User interface

**FIG.8**

**FIG.9**

**FIG.10**

**FIG.11**

First power determination
unit — 1201

First transmission unit — 1202

**FIG.12**

Second power determination
unit — 1301

Second transmission unit — 1302

**FIG.13**

Third power determination
unit — 1401

Third transmission unit — 1402

**FIG.14**

First indication sending unit — 1501

**FIG.15**

| Second indication sending unit |
|---|

FIG.16

## INTERNATIONAL SEARCH REPORT

International application No.

**PCT/CN2024/093780**

| A. | CLASSIFICATION OF SUBJECT MATTER |
|---|---|

H04W 52/14(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABS, ENTXTC, 3GPP: 探测参考信号, 天线端口, SRS资源, 传输功率, 系数, 缩放, 最大传输功率, SRS, antenna, port, resource, transmission, power, coefficient, zoom, max

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116095803 A (DATANG MOBILE COMMUNICATIONS EQUIPMENT CO., LTD.) 09 May 2023 (2023-05-09)<br>description, paragraphs [0155]-[0226], and claims 1-25 | 1-49 |
| X | CN 116095802 A (DATANG MOBILE COMMUNICATIONS EQUIPMENT CO., LTD.) 09 May 2023 (2023-05-09)<br>description, paragraphs [0118]-[0291] | 1-49 |
| A | CN 111294912 A (GUANGDONG OPPO MOBILE COMMUNICATIONS CO., LTD.) 16 June 2020 (2020-06-16)<br>entire document | 1-49 |
| A | CN 111726868 A (CHINA MOBILE COMMUNICATION LTD., RESEARCH INSTITUTE et al.) 29 September 2020 (2020-09-29)<br>entire document | 1-49 |
| A | WO 2019197526 A1 (TELEFONAKTIEBOLAGET LM ERICSSON (PUBL)) 17 October 2019 (2019-10-17)<br>entire document | 1-49 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 August 2024** | **16 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/093780**

| Patent document cited in search report | | | Publication date (day/month/year) | Patent family member(s) | | | Publication date (day/month/year) |
|---|---|---|---|---|---|---|---|
| CN | 116095803 | A | 09 May 2023 | WO | 2023078429 | A1 | 11 May 2023 |
| | | | | TW | 202320567 | A | 16 May 2023 |
| CN | 116095802 | A | 09 May 2023 | WO | 2023078434 | A1 | 11 May 2023 |
| | | | | TW | 202320501 | A | 16 May 2023 |
| CN | 111294912 | A | 16 June 2020 | KR | 20200018452 | A | 19 February 2020 |
| | | | | JP | 2020529143 | A | 01 October 2020 |
| | | | | EP | 3624535 | A1 | 18 March 2020 |
| | | | | US | 2020205082 | A1 | 25 June 2020 |
| | | | | WO | 2019000321 | A1 | 03 January 2019 |
| | | | | CN | 110786072 | A | 11 February 2020 |
| | | | | TW | 201906458 | A | 01 February 2019 |
| CN | 111726868 | A | 29 September 2020 | | None | | |
| WO | 2019197526 | A1 | 17 October 2019 | TW | 201944819 | A | 16 November 2019 |
| | | | | US | 2021083824 | A1 | 18 March 2021 |
| | | | | EP | 3777360 | A1 | 17 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310544333X